# EUROPEAN PATENT SPECIFICATION

(11) **EP 3 896 704 B1**
(45) Date of publication and mention of the grant of the patent: **18.09.2024**
(21) Application number: 19894475.3
(22) Date of filing: 12.11.2019
(51) Int. Cl.: G21C 9/004, G21F 9/02, G21F 9/06, G21C 13/02

(54) **ORGANIC IODINE COLLECTION DEVICE AND ORGANIC IODINE COLLECTION METHOD**
VORRICHTUNG UND VERFAHREN ZUM SAMMELN VON ORGANISCHEM JOD
DISPOSITIF DE COLLECTE D'IODE ORGANIQUE ET PROCÉDÉ DE COLLECTE D'IODE ORGANIQUE

(30) Priority: 14.12.2018 JP 2018234582
(43) Date of publication of application: 20.10.2021
(73) Proprietor: HITACHI-GE NUCLEAR ENERGY, LTD., Hitachi-shi Ibaraki 317-0073 (JP)
(72) Inventor: FUKUI, Sohei, Tokyo 100-8280 (JP); TANAKA, Motoi, Hitachi-shi, Ibaraki 317-0073 (JP); TANAKA, Masaaki, Hitachi-shi, Ibaraki 317-0073 (JP); TOTSUKA, Fumio, Hitachi-shi, Ibaraki 317-0073 (JP); HASHIMOTO, Tomoharu, Hitachi-shi, Ibaraki 317-0073 (JP); TOMINAGA, Kazuo, Hitachi-shi, Ibaraki 317-0073 (JP)
(74) Representative: MERH-IP Matias Erny Reichl Hoffmann Patentanwälte PartG mbB
(86) International application number: PCT/JP2019/044320
(87) International publication number: WO 2020/121714

(56) References cited:
- JP-A- 2016 053 488
- JP-A- 2017 223 535
- JP-A- 2017 223 535
- JP-A- S5 875 100
- JP-A- S5 875 100
- JP-A- S57 153 286
- US-A1- 2016 019 987

## Description

### Technical Field

The present invention relates to an organic iodine trapping apparatus and an organic iodine trapping method for trapping radioactive organic iodine released from a nuclear reactor as well as organic iodine contained in a fluid such as steam.

### Background Art

A nuclear reactor facility is equipped with a filtered containment venting apparatus to prevent radioactive materials released from the nuclear reactor from leaking into the environment. When core damage occurs in a nuclear reactor accident and the pressure inside the container vessel rises abnormally, the container vessel is damaged, large-scale leakage is caused, and thus, the steam in the container vessel is vented in advance. When the high-temperature and high-pressure steam is released from the nuclear reactor into the container vessel, the steam is passed through a filtered containment venting apparatus, and the major radioactive materials are removed before being released into the atmosphere.

The radioactive materials generated during a nuclear reactor accident include noble gases, aerosols, inorganic iodine, organic iodine, and the like. In the filtered containment venting apparatus, these radioactive materials, except for noble gases, are trapped in the vessel and the release thereof to the environment is prevented. In general, as described in PTL 1, the filtered containment venting apparatus retains scrubbing water, which acts as a wet type filter, in the vessel, and has a metal filter which is a dry type filter embedded therein.

The scrubbing water is an aqueous solution in which sodium thiosulfate or sodium hydroxide is dissolved, and the vented steam is released into the scrubbing water. Inorganic iodine (elemental iodine) ionized by the reaction with sodium thiosulfate or hydrophilic aerosols is dissolved and trapped in the scrubbing water. Aerosols released into the gas phase are trapped by adhesion and collision with the metal filter. Organic iodine is trapped by a dry type filter such as silver zeolite or activated carbon, as described in PTL 2.

### Citation List

### Patent Literature

PTL 1: JP-T-2015-522161
PTL 2: JP-A-7-209488
PTL 3: JP 2017 223535 A
PTL 4: US 2016/019987 A1
PTL 5: JP S58 75100 A

PTL 3 describes a filter vent apparatus capable of trapping iodine of a radioactive substance.
PTL 4 describes a pressure-relief system for the containment of a nuclear power facility.
PTL 5 describes a building ventilation air conditioning system and an emergency gas processing system of a nuclear power plant.

### Summary of Invention

### Technical Problem

The organic iodine released from the nuclear reactor is insoluble in water, including methyl iodine, and is not sufficiently trapped when being introduced into the pool water or the scrubbing water in a pressure suppression chamber during venting. There is also a case where organic iodine, such as methyl iodine, is newly generated by the reaction of elemental iodine in the exhaust process from the nuclear reactor. For these reasons, organic iodine is a radioactive material of which the leakage is difficult to be prevented, and thus, there is a need for a filtered containment venting apparatus that can efficiently trap organic iodine.

Silver zeolite or activated carbon is known as a trapping material for trapping the organic iodine (refer to Patent Literature 2). However, since the trapping efficiency of these trapping materials deteriorates in a case where moisture adheres thereto, a mechanism to remove the hygroscopic moisture is required as in Patent Literature 2, and the structure of the filtered containment venting apparatus becomes complicated. Since a large amount of these trapping materials is required, special apparatus design or complicated apparatus structure is required as in Patent Literature 2, and the cost of the trapping materials themselves increases.

Here, an object of the present invention is to provide an organic iodine trapping apparatus and an organic iodine trapping method capable of efficiently trapping organic iodine in a nuclear reactor container vessel.

### Solution to Problem

In order to solve the above-described problems, an organic iodine trapping apparatus according to the present invention is defined in claim 1.

An organic iodine trapping method according to the defined in claim 7. present invention is

### Advantageous Effects of Invention

According to the present invention, it is possible to provide an organic iodine trapping apparatus and an organic iodine trapping method capable of efficiently trapping organic iodine in a nuclear reactor container vessel.

### Brief Description of Drawings

[Fig. 1] Fig. 1 is a sectional view schematically illustrating an example of an organic iodine trapping apparatus which is not part of the present invention.
[Fig. 2] Fig. 2 is a sectional view schematically illustrating an example of an organic iodine trapping apparatus, which is not part of the present invention.
[Fig. 3] Fig. 3 is a sectional view schematically illustrating an example of an organic iodine trapping apparatus, which is not part of the present invention.
[Fig. 4] Fig. 4 is a sectional view schematically illustrating an example of an organic iodine trapping apparatus, which is not part of the present invention.
[Fig. 5] Fig. 5 is a sectional view schematically illustrating an example of an organic iodine trapping apparatus, which is not part of the present invention.
[Fig. 6] Fig. 6 is a sectional view schematically illustrating an example of an organic iodine trapping apparatus, which is not part of the present invention.
[Fig. 7] Fig. 7 is a sectional view schematically illustrating an example of the organic iodine trapping apparatus according to the present invention.
[Fig. 8] Fig. 8 is a sectional view schematically an organic illustrating an example of iodine trapping apparatus, which is not part of the present invention.
[Fig. 9] Fig. 9 is a sectional view schematically an organic illustrating an example of iodine trapping apparatus, which is not part of the present invention.
[Fig. 10] Fig. 10 is a sectional view schematically illustrating an example of an organic iodine trapping apparatus, which is not part of the present invention.
[Fig. 11] Fig. 11 is a sectional view schematically illustrating an example of the organic iodine trapping apparatus according to the present invention.
[Fig. 12] Fig. 12 is a sectional view schematically illustrating an example of an organic iodine trapping apparatus, which is not part of the present invention.

### Description of Embodiments

An organic iodine trapping apparatus and an organic iodine trapping method according to an embodiment of the present invention will be described below with reference to the drawings 7 and 11. In each of the following drawings, configurations having common main functions will be given the same reference numerals and the redundant description thereof will be omitted.

In the organic iodine trapping apparatus and the organic iodine trapping method according to the present embodiment, a gas (fluid) containing organic iodine released into a nuclear reactor container vessel passes through a non-volatile liquid that acts as a wet type filter during filter-venting at the time of a nuclear reactor accident, and the organic iodine in the gas is decomposed and trapped in the non-volatile liquid. In this apparatus and method, radioactive organic iodine is decomposed into the ionic state and trapped in a vessel under isolation.

A non-volatile liquid that does not substantially volatilize at temperatures lower than approximately 160°C is used as a non-volatile liquid. When a nuclear reactor accident occurs, venting of steam at high temperatures of around 160°C is expected. When the liquid that acts as a wet type filter is non-volatile, the liquid itself can avoid volatilization even when high-temperature and high-pressure gas is introduced during venting. A non-volatile liquid that does not substantially volatilize at temperatures lower than 200°C is used as a non-volatile liquid.

As a non-volatile liquid, a liquid that exhibits the action of decomposing organic iodine is used. When the liquid that acts as a wet type filter is capable of decomposing organic iodine, it is possible to dissociate radioactive iodine ions from radioactive organic iodine. Since iodine ions are more stable in the liquid phase compared to organic iodine, radioactive organic iodine can be trapped in the liquid phase and leakage to the environment can be reliably prevented.

For example, ionic liquid, interfacial active agent solution, and mixtures of these liquids can be used as non-volatile liquid. Particularly preferable non-volatile liquid is ionic liquid. According to the ionic liquid, non-volatility that practically does not volatilize at 160°C or lower, heat resistance that can withstand high temperatures of around 160°C, high radiation resistance, high chemical stability, and high electrical stability can be obtained. The compatibility between liquids and the specific gravity between liquids can be easily controlled based on the combination of a wide variety of ions.

Cations that make up the ionic liquid include, for example, organic cations such as phosphonium, ammonium, sulfonium, pyrrolidinium, and piperidinium.

Cations that make up the ionic liquid may be either organic cations with chain-like carbon chains or cyclic carbon chains with annular carbon chains, but organic cation with carbon chains of two or more carbon atoms is preferable. In a case of such a bulky organic cation, the reaction rate of organic iodine with the cation increases, and thus, organic iodine can be trapped with high trapping efficiency.

Anions that make up the ionic liquid include, for example, inorganic anions such as halogens, tetrafluoroborates, and hexafluorophosphates, and organic anions such as acetates, sulfonates, and imidates. Halogens include fluoride ions, chloride ions, bromide ions, and iodide ions.

As anions that make up the ionic liquid, ions with high nucleophilicity are preferable in terms of a strong action of decomposing organic iodine. As anions, halogens, imidates, or tetrafluoroborates are more preferable in terms of high nucleophilicity, difficulty in causing thermal decomposition or hydrolysis, and difficulty in changing pH of the scrubbing water in a case of being injected into the filtered containment venting vessel.

As halogens that make up the ionic liquid, chloride ions are preferable in terms of the safety and high nucleophilicity. Non-radioactive iodide ions are preferable in terms of avoiding leakage of radioactive material due to volatilization of elemental iodine. Even when radioiodine is once decomposed and trapped, there is a possibility that the radioactive organic iodine trapped in the liquid phase reacts with iodine ions in the liquid phase, and generates volatile elemental iodine. When the halogens that make up the ionic liquid are non-radioactive iodide ions, the probability of generating elemental iodine can be reduced.

Specific examples of non-volatile liquids include trihexyl(tetradecyl)phosphonium chloride and trihexyl(tetradecyl)phosphonium dicyanamide. As a non-volatile liquid, trihexyl(tetradecyl)phosphonium chloride is particularly preferable in terms of high ability to decompose organic iodine.

Generally, the decomposition reaction of organic iodine is started quickly by an attack on the binding iodine when the gas containing the organic iodine is introduced into a liquid having high nucleophilicity. However, the general wet type filter of the related art is kept under ambient temperature before the nuclear reactor accident. When a nuclear reactor accident occurs, the high-temperature and high-pressure gas in the nuclear reactor container vessel is vented and passed through the wet filter, but in the early stage of venting, there is a possibility that the wet type filter remains at a low temperature.

Here, in the organic iodine trapping apparatus and the organic iodine trapping method according to the present embodiment, the organic iodine is decomposed after a non-volatile liquid that can decompose organic iodine is heated. The non-volatile liquid can be heated to any temperature above ambient temperature by using the heat in the nuclear reactor container vessel, the reaction heat of the substance in the nuclear reactor container vessel, or both of the heat. The non-volatile liquid may be heated before introducing the gas containing organic iodine into the non-volatile liquid, or may be heated while introducing the gas containing organic iodine into the non-volatile liquid.

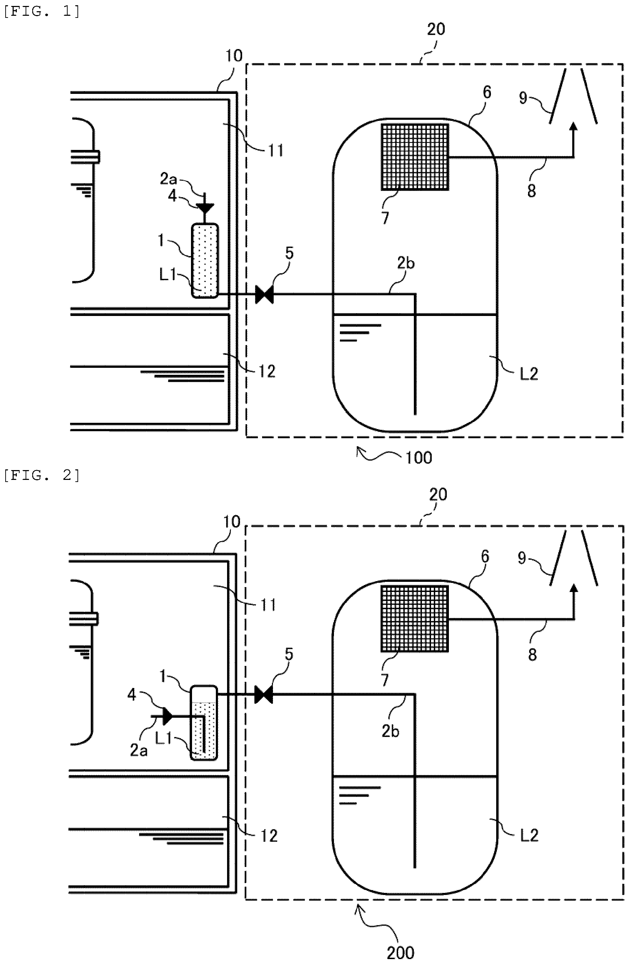

Fig. 1 is a sectional view schematically illustrating an example of an organic iodine trapping apparatus, which is not part of the present invention.

Fig. 1 illustrates a trapping apparatus in which a liquid vessel containing a non-volatile liquid capable of decomposing organic iodine is installed in a dry well in the nuclear reactor container vessel, and the non-volatile liquid is heated by the heat in the nuclear reactor container vessel.

As illustrated in Fig. 1, the trapping apparatus 100 according to the present embodiment is incorporated in a nuclear reactor container vessel 10 which encloses the nuclear reactor pressure vessel, and a filtered containment venting apparatus 20 which removes radioactive materials from the steam (gas) in the nuclear reactor container vessel 10 and releases the steam into the environment. The trapping apparatus 100 includes a liquid vessel 1, upstream vent pipes (2a, 2b), a pressure release valve 4, an isolation valve 5, a filtered containment venting vessel 6, a metal filter 7, a downstream vent pipe 8, and an exhaust pipe 9.

The nuclear reactor container vessel 10 includes a dry well 11 in which a nuclear reactor pressure vessel is stored, and a wet well 12 in which a pressure suppression pool is formed. The pool water is stored in the wet well 12. Steam released into the dry well 11 or steam released by overpressure from the main steam system can flow into the wet well 12 through a vent pipe (not illustrated). As the high-temperature and high-pressure gas is condensed by the pool water, the pressure in the nuclear reactor container vessel 10 is suppressed.

In the trapping apparatus 100, the dry well 11 is connected to the upstream vent pipes (2a, 2b) for venting the gas in the nuclear reactor container vessel 10. The liquid vessel 1 is connected in the middle of the upstream vent pipes (2a, 2b). The liquid vessel 1 is installed in the dry well 11 of the nuclear reactor container vessel 10.

The liquid vessel 1 is a sealed vessel containing a non-volatile liquid L1 that can decompose organic iodine. The non-volatile liquid L1, which acts as a wet type filter, is prepared in the liquid vessel 1 for a nuclear reactor accident. The shape and capacity of the liquid vessel 1 and the amount of non-volatile liquid L1 are not particularly restricted. The liquid vessel 1 may be provided with fins, tubes, and the like for heat exchange in order to efficiently heat the non-volatile liquid L1.

The introduction pipe 2a, which configures the upstream vent pipe, is connected to the inlet side of the liquid vessel 1. The inlet of the introduction pipe 2a is open at the dry well 11 in the nuclear reactor container vessel 10. The outlet of the introduction pipe 2a is open at the upper part in the liquid vessel 1.

The introduction pipe 2a is a pipe for venting the gas (fluid) in the nuclear reactor container vessel 10, and is used for introducing the gas (fluid) containing organic iodine into the non-volatile liquid L1. The pressure release valve 4 is provided in the introduction pipe 2a. The pressure release valve 4 is a normally closed valve that opens at a predetermined set pressure exceeding atmospheric pressure.

The discharge pipe 2b, which configures the upstream vent pipe, is connected to the outlet side of the liquid vessel 1. The inlet of the discharge pipe 2b is open at the lower part in the liquid vessel 1. The other end of the discharge pipe 2b is connected to the filtered containment venting vessel 6. The outlet of the discharge pipe 2b is open at the liquid phase portion in the filtered containment venting vessel 6.

The discharge pipe 2b is a pipe for venting the gas (fluid) in the nuclear reactor container vessel 10, and is used for discharging the gas (fluid) introduced into the non-volatile liquid L1 from the liquid vessel 1. The isolation valve 5 is provided in the discharge pipe 2b. The isolation valve 5 is a normally closed valve that can be freely opened and closed by a manual operation or an automatic operation.

The filtered containment venting vessel 6 is used to condense the vented gas and to remove radioactive materials contained in the gas. Scrubbing water L2 is prepared in the filtered containment venting vessel 6. As the scrubbing water L2, an aqueous solution in which alkali, such as sodium thiosulfate or sodium hydroxide, is dissolved is used. At the outlet of the discharge pipe 2b, a scrubber nozzle (not illustrated), for example, formed by multiple Venturi nozzles, can be attached. According to the scrubber nozzle, the vented gas can be ejected into the liquid as fine bubbles.

The filtered containment venting vessel 6 includes the metal filter 7 at the upper part in the vessel. The metal filter 7 is formed by lamination of metal fibers, metal mesh, and the like. According to the metal filter 7, aerosols released into the gas phase in the vessel can be trapped by adhesion or collision with the metal.

In the filtered containment venting vessel 6, the downstream vent pipe 8 is connected to the secondary side of the metal filter 7. The other end of the downstream vent pipe 8 is connected to the exhaust pipe 9. The exhaust pipe 9 is provided to release the vented gas from the nuclear reactor container vessel 10 into the environment.

The filtered containment venting vessel 6 can also include a baffle (not illustrated) that exerts resistance to the high-temperature and high-pressure gas ejected into the liquid. As a baffle, for example, an orifice-shaped baffle plate, a spiral plate, a perforated plate such as metal mesh or perforated metal, or a porous material such as ceramic can be provided at the height of the liquid phase portion in the filtered containment venting vessel 6.

The organic iodine flowing into the filtered containment venting vessel 6 is estimated to be in gaseous form. The dissolution of gaseous organic iodine into the liquid or the decomposition of organic iodine are considered to proceed by diffusiophoresis, thermal phoresis, Brownian diffusion, convection and the like in the bubble. When the baffle is provided in the filtered containment venting vessel 6, the stagnation time of the bubbles ejected into the liquid becomes longer, the contact time between the organic iodine and the liquid becomes longer, and thus, the trapping efficiency of the organic iodine increases.

Next, the trapping method of organic iodine using the trapping apparatus 100 which is not part of the present invention, will be described in detail.

When a serious accident occurs in a nuclear reactor, such as the damage of the pressure vessel, various radioactive materials are released into the container vessel along with the high-temperature and high-pressure steam caused by the evaporation of cooling water or the like. Depending on the power of the nuclear reactor or the accident scenario, it is estimated that approximately 1 kg of radioactive organic iodine is released during a severe accident, such as the damage of the container vessel. As a main component of organic iodine, volatile methyl iodine (CH₃I) is expected.

When a serious accident occurs in the nuclear reactor and the pressure in the container vessel becomes excessively high, the container vessel is damaged, and a large-scale leakage of the radioactive materials occurs. Therefore, venting is performed as a measure to prevent such an event. The gas (steam) to be vented contains radioactive materials such as noble gases, aerosols, inorganic iodine, and organic iodine. These radioactive materials are trapped by the filtered containment venting apparatus 20 and prevented from leaking into the environment.

In the trapping apparatus 100, the non-volatile liquid L1 in the liquid vessel 1 is heated by the heat in the dry well 11 of the nuclear reactor container vessel 10, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine from the liquid vessel 1 to the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11. The non-volatile liquid L1 may be heated by heat conduction from the nuclear reactor structure material to the liquid vessel 1, heat transfer from the gas in the space to the liquid vessel 1, and radiation from the nuclear reactor structure material or the gas in the space.

When a nuclear reactor accident occurs, high-temperature and high-pressure gas is released into the nuclear reactor container vessel 10, and when the pressure inside the nuclear reactor container vessel 10 exceeds the set pressure, the pressure release valve 4 is opened. When the pressure release valve 4 is opened, the high-temperature and high-pressure gas in the dry well 11 flows into the liquid vessel 1 through the introduction pipe 2a. The non-volatile liquid L1 prepared in the liquid vessel 1 is further heated by contact with the incoming gas and starts to react with the organic iodine in the gas.

When the pressure inside the nuclear reactor container vessel 10 becomes high and it is determined that the dry well 11 needs to be vented, the isolation valve 5 is opened. The isolation valve 5 may be opened at the same time as the pressure release valve 4, or after the pressure release valve 4. When the isolation valve 5 is opened, the non-volatile liquid L1 prepared in the liquid vessel 1 is pushed by the high-temperature and high-pressure gas and sent to the filtered containment venting vessel 6 through the discharge pipe 2b while decomposing organic iodine.

The gas vented from the nuclear reactor container vessel 10 is ejected into the liquid in the filtered containment venting vessel 6 along with the non-volatile liquid L1. The vented gas is passed through the non-volatile liquid L1 in the filtered containment venting vessel 6 after all of the prepared non-volatile liquid L1 is discharged from the liquid vessel 1.

In the filtered containment venting vessel 6, the organic iodine contained in the vented gas reacts with the non-volatile liquid L1 and is decomposed into iodine ions and organic matter. The dissociated iodine ions, aerosols contained in the vented gas, inorganic iodine and the like are dissolved and trapped in the non-volatile liquid L1 or the scrubbing water L2. Aerosols that are not trapped in the liquid phase and are released into the gas phase are trapped in the metal filter 7. After this, the gas from which radioactive materials are removed is released into the environment through the exhaust pipe 9.

As the non-volatile liquid L1, a liquid composed of hydrophilic (easily water-soluble) or hydrophobic (water-insoluble) substances may be used. When the non-volatile liquid L1 is hydrophilic, it will be easier for the non-volatile liquid L1 to mix with the scrubbing water L2. Hydrophilic radioactive materials are more easily trapped by dissolution, and hydrophobic radioactive materials are more easily trapped by coagulation and settling. Meanwhile, when the non-volatile liquid L1 is hydrophobic, hydrophobic radioactive materials are more easily trapped in the non-volatile liquid L1, and hydrophilic radioactive materials are more easily trapped in the scrubbing water L2.

As the non-volatile liquid L1, a liquid with a specific gravity greater than that of water or the scrubbing water L2 may be used, or a liquid with a specific gravity less than that of water or the scrubbing water L2 may be used. When the hydrophobic non-volatile liquid L1 is used, the liquids are easily phase-separated from each other to form a two-layer liquid. When the non-volatile liquid L1 with a small specific gravity is used, the upper layer is the non-volatile liquid L1 and the lower layer is the scrubbing water L2. With such a layer configuration, the volatilization of organic iodine or secondarily generated elemental iodine can be reliably prevented by the non-volatile liquid L1 in the upper layer. Meanwhile, when the non-volatile liquid L1 with a high specific gravity is used, the upper layer is the scrubbing water L2 and the lower layer is the non-volatile liquid L1. With such a layer configuration, radioactive materials with low volatility can be efficiently trapped by coagulation and settling in the non-volatile liquid L1 in the lower layer.

According to the trapping apparatus 100 and the trapping method described above, the liquid vessel 1 is installed in the dry well 11 in the nuclear reactor container vessel 10, the non-volatile liquid L1 is heated by the heat of the dry well 11 in the nuclear reactor container vessel 10, and thus, the reaction rate between the non-volatile liquid L1 and organic iodine can be increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 100 and the trapping method described above, the outlet of the introduction pipe 2a is open at the upper part in the liquid vessel 1, the inlet of the discharge pipe 2b is open at the lower part in the liquid vessel 1, and thus, the non-volatile liquid L1 prepared in the liquid vessel 1 can be easily transferred to the filtered containment venting vessel 6 by using the pressure difference between the inside and outside of the nuclear reactor container vessel 10 and the hydraulic head of the non-volatile liquid L1. After transferring the non-volatile liquid L1, the liquid vessel 1 becomes empty, and thus, it is possible to avoid a large flow resistance to the gas to be vented. Since the non-volatile liquid L1 is transferred to the filtered containment venting vessel 6, the reaction time between the non-volatile liquid L1 and organic iodine can be sufficiently ensured, and the reaction products can be trapped in the mixed-phase liquid.

Fig. 2 is a sectional view schematically illustrating an example of another organic iodine trapping apparatus, which is not part of the present invention.

Fig. 2 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel.

As illustrated in Fig. 2, similar to the above-described trapping apparatus 100, a trapping apparatus 200 according to the present embodiment is incorporated in the nuclear reactor container vessel 10 and the filtered containment venting apparatus 20. The trapping apparatus 200 includes the liquid vessel 1, the upstream vent pipes (2a, 2b), the pressure release valve 4, the isolation valve 5, the filtered containment venting vessel 6, the metal filter 7, the downstream vent pipe 8, and the exhaust pipe 9.

The trapping apparatus 200 according to the present embodiment is different from the above-described trapping apparatus 100 in a pipe system related to the liquid vessel 1, the introduction pipe 2a, and the discharge pipe 2b. Other apparatus configurations of the trapping apparatus 200 are substantially the same as those of the above-described trapping apparatus 100.

In the trapping apparatus 200, the inlet of the introduction pipe 2a is open at the dry well 11 in the nuclear reactor container vessel 10. The outlet of the introduction pipe 2a is open at the liquid phase portion on the lower part side in the liquid vessel 1. Meanwhile, the inlet of the discharge pipe 2b is open at the gas phase portion on the upper part side in the liquid vessel 1. The outlet of the discharge pipe 2b is open at the liquid phase portion in the filtered containment venting vessel 6.

According to this type of pipe system, the liquid vessel 1 can function as the wet type filter. At the outlet of the introduction pipe 2a, a scrubber nozzle formed by, for example, multiple Venturi nozzles, can be attached. Similar to the filtered containment venting vessel 6, the liquid vessel 1, which functions as the wet type filter, can also be provided with a baffle that exerts resistance to the high-temperature and high-pressure gas ejected into the liquid.

Next, the trapping method of organic iodine using the trapping apparatus 200 will be described in detail.

In the trapping apparatus 200, the non-volatile liquid L1 in the liquid vessel 1 is heated by the heat in the dry well 11 of the nuclear reactor container vessel 10, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the liquid vessel 1.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When a nuclear reactor accident occurs, the high-temperature and high-pressure gas is released into the nuclear reactor container vessel 10, and when the pressure inside the dry well 11 exceeds the set pressure, the pressure release valve 4 is opened. When the pressure release valve 4 is opened, the high-temperature and high-pressure gas in the dry well 11 flows into the liquid vessel 1 through the introduction pipe 2a. The non-volatile liquid L1 prepared in the liquid vessel 1 is further heated by contact with the incoming gas and starts to react with the organic iodine in the gas.

In the liquid vessel 1, the organic iodine contained in the vented gas reacts with the non-volatile liquid L1 and is decomposed into iodine ions and organic matter. The dissociated iodine ions, aerosols contained in the vented gas, inorganic iodine and the like are dissolved and trapped in the non-volatile liquid L1.

When the pressure in the nuclear reactor container vessel 10 becomes high and it is determined that the dry well 11 or the liquid vessel 1 needs to be vented, the isolation valve 5 is opened. The isolation valve 5 may be opened at the same time as the pressure release valve 4, may be opened before the pressure release valve 4, or may be opened after the pressure release valve 4. When the isolation valve 5 is opened, radioactive materials that are not trapped in the liquid phase in the liquid vessel 1 and released into the gas phase are sent to the filtered containment venting vessel 6 through the discharge pipe 2b.

In the filtered containment venting vessel 6, radioactive materials remaining in the vented gas are trapped by dissolution and coagulation in the scrubbing water L2. Aerosols that are not trapped in the liquid phase and are released into the gas phase are trapped in the metal filter 7. After this, the gas from which radioactive materials are removed is released into the environment through the exhaust pipe 9.

According to the trapping apparatus 200 and the trapping method described above, the liquid vessel 1 is installed in the dry well 11 in the nuclear reactor container vessel 10, the non-volatile liquid L1 is heated by the heat of the dry well 11 in the nuclear reactor container vessel 10, and thus, the reaction rate between the non-volatile liquid L1 and organic iodine can be increased during venting. Since the non-volatile liquid L1 is preheated before coming into contact with a large amount of organic iodine, and heated during the reaction, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 200 and the trapping method described above, the outlet of the introduction pipe 2a is open at the liquid phase portion on the lower part side in the liquid vessel 1, the inlet of the discharge pipe 2b is open at the gas phase portion on the upper part side in the liquid vessel 1, and thus, the trapping can be continued in the liquid vessel 1. Since organic iodine and other radioactive materials are trapped in the boundary of the container vessel, the risk of leakage of trapped radioactive materials can be further reduced.

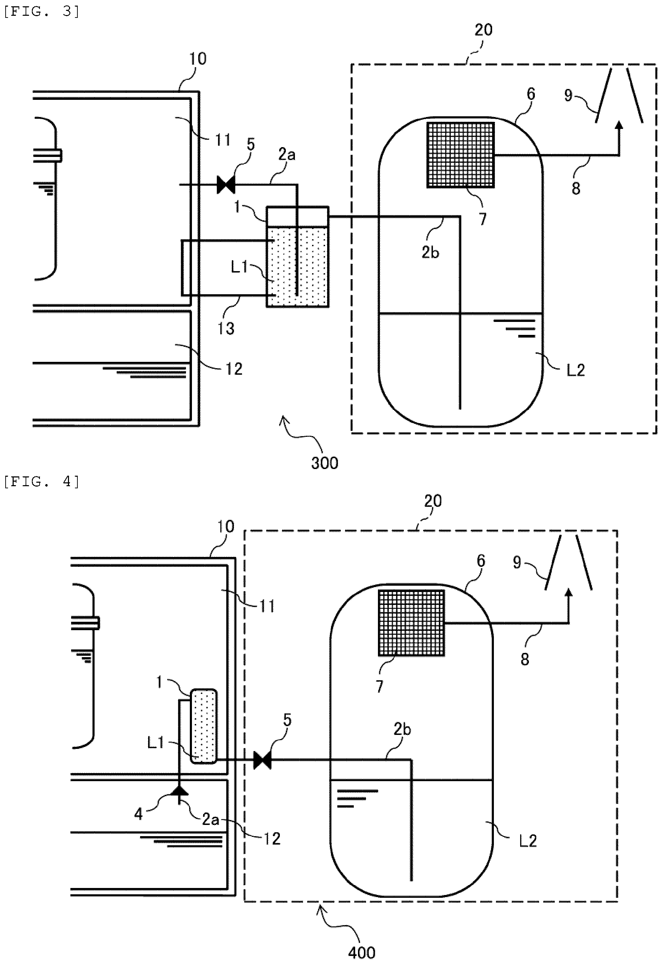

Fig. 3 is a sectional view schematically illustrating an example of another organic iodine trapping apparatus, which is not part of the present invention.

Fig. 3 illustrates the trapping apparatus in which the liquid vessel containing the non-volatile liquid capable of decomposing organic iodine is installed outside the nuclear reactor container vessel, and the non-volatile liquid is heated by the heat in the nuclear reactor container vessel.

As illustrated in Fig. 3, similar to the trapping apparatus 100, a trapping apparatus 300 according to the present embodiment is incorporated in the nuclear reactor container vessel 10 and the filtered containment venting apparatus 20. The trapping apparatus 300 includes the liquid vessel 1, the upstream vent pipes (2a, 2b), the isolation valve 5, the filtered containment venting vessel 6, the metal filter 7, the downstream vent pipe 8, the exhaust pipe 9, and a circulation pipe 13.

The trapping apparatus 300 according to the present embodiment is different from the above-described trapping apparatus 100 in that the liquid vessel 1 is installed outside the nuclear reactor container vessel 10, and the circulation pipe 13 is connected to the liquid vessel 1. Other apparatus configurations of the trapping apparatus 300 are substantially the same as those of the above-described trapping apparatus 100.

In the trapping apparatus 200, the liquid vessel 1 is connected in the middle of the upstream vent pipes (2a, 2b). The liquid vessel 1 is installed outside the nuclear reactor container vessel 10. The liquid vessel 1 may be installed inside the nuclear reactor building or outside the nuclear reactor building as long as the liquid vessel 1 is outside the nuclear reactor container vessel 10.

Similar to the above-described trapping apparatus 100, the introduction pipe 2a, which configures the upstream vent pipe, is connected to the inlet side of the liquid vessel 1. The isolation valve 5 is provided in the introduction pipe 2a. Similar to the above-described trapping apparatus 100, the discharge pipe 2b, which configures the upstream vent pipe, is connected to the outlet side of the liquid vessel 1.

According to this type of pipe system, the liquid vessel 1 can function as the wet type filter. At the outlet of the introduction pipe 2a, a scrubber nozzle formed by, for example, multiple Venturi nozzles, can be attached. Similar to the filtered containment venting vessel 6, the liquid vessel 1, which functions as the wet type filter, can also be provided with a baffle that exerts resistance to the high-temperature and high-pressure gas ejected into the liquid.

The circulation pipe 13 forms a closed annular flow path from the liquid vessel 1 through the dry well 11 of the nuclear reactor container vessel 10 and back to the liquid vessel 1. One end of the circulation pipe 13 is connected to the lower part of the liquid vessel 1, and the other end is connected to the upper part side thereof. The middle part of the circulation pipe 13 is in the dry well 11 and is laid vertically such that the pipeline follows the vertical direction.

According to the circulation pipe 13, when the non-volatile liquid L1 in the circulation pipe 13 is heated by the heat in the nuclear reactor container vessel 10, the non-volatile liquid L1 can be circulated by natural convection . When the non-volatile liquid L1 is heated at the middle part of the circulation pipe 13, the non-volatile liquid L1 at the middle part of the circulation pipe 13 rises, the non-volatile liquid L1 in the liquid vessel 1, which is at a lower temperature, drops, and thus, the non-volatile liquid L1 naturally circulates.

Next, the trapping method of organic iodine using the trapping apparatus 300 will be described in detail.

In the trapping apparatus 300, the non-volatile liquid L1 in the liquid vessel 1 is heated by the heat in the dry well 11 of the nuclear reactor container vessel 10, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the liquid vessel 1.

When high-temperature and high-pressure steam (gas) is released into the nuclear reactor container vessel 10 during a nuclear reactor accident, the temperature and pressure inside the nuclear reactor container vessel 10 increases. Although the liquid vessel 1 is installed outside the nuclear reactor container vessel 10, the non-volatile liquid L1 in the circulation pipe 13 that passes through the nuclear reactor container vessel 10 is heated. Therefore, the non-volatile liquid L1 is heated by the heat in the nuclear reactor container vessel 10 while naturally circulating between the liquid vessel 1 and the nuclear reactor container vessel 10 through the circulation pipe 13.

When the pressure inside the nuclear reactor container vessel 10 becomes high and it is determined that the dry well 11 needs to be vented, the isolation valve 5 is opened. When the isolation valve 5 is opened, the high-temperature and high-pressure gas in the dry well 11 flows into the liquid vessel 1 through the introduction pipe 2a. The non-volatile liquid L1 prepared in the liquid vessel 1 is further heated by contact with the incoming gas and starts to react with the organic iodine in the gas.

In the liquid vessel 1, similar to the above-described trapping apparatus 200, the radioactive materials contained in the vented gas are trapped by the non-volatile liquid L1. In the filtered containment venting vessel 6, similar to the above-described trapping apparatus 200, the radioactive materials that are not trapped in the liquid phase in the liquid vessel 1 and released to the gas phase are trapped by the scrubbing water L2 or the metal filter 7.

According to the trapping apparatus 300 and the trapping method described above, the liquid vessel 1 is installed outside the nuclear reactor container vessel 10, the non-volatile liquid L1 is heated by the heat in the nuclear reactor container vessel 10 through the circulation pipe 13, and thus, the reaction rate between the non-volatile liquid L1 and organic iodine can be increased during venting without providing a place for installing the liquid vessel 1 in the nuclear reactor container vessel 10. Since the non-volatile liquid L1 is preheated before coming into contact with a large amount of organic iodine, and heated during the reaction, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 300 and the trapping method described above, the outlet of the introduction pipe 2a is open at the liquid phase portion on the lower part side in the liquid vessel 1, the inlet of the discharge pipe 2b is open at the gas phase portion on the upper part side in the liquid vessel 1, and thus, similar to the above-described trapping apparatus 200, the trapping can be continued in the liquid vessel 1. Since the non-volatile liquid L1 in the liquid vessel 1 is heated entirely by natural circulation, there is no need for forced circulation by a pump and the like, and high trapping efficiency can be obtained even when the power source is lost. Since the agitation is performed by natural circulation, the non-volatile liquid L1 and organic iodine can be reacted efficiently.

Fig. 4 is a sectional view schematically illustrating an example of another organic iodine trapping apparatus, which is not part of the present invention.

Fig. 4 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel.

As illustrated in Fig. 4, similar to the trapping apparatus 100, a trapping apparatus 400 according to the present embodiment is incorporated in the nuclear reactor container vessel 10 and the filtered containment venting apparatus 20. The trapping apparatus 400 includes the liquid vessel 1, the upstream vent pipes (2a, 2b), the pressure release valve 4, the isolation valve 5, the filtered containment venting vessel 6, the metal filter 7, the downstream vent pipe 8, and the exhaust pipe 9.

The trapping apparatus 400 according to the present embodiment is different from the above-described trapping apparatus 100 in a pipe system related to the introduction pipe 2a. Other apparatus configurations of the trapping apparatus 400 are substantially the same as those of the above-described trapping apparatus 100.

In the trapping apparatus 400, the inlet of the introduction pipe 2a is open at the wet well 12 in the nuclear reactor container vessel 10. The outlet of the introduction pipe 2a is open at the upper part in the liquid vessel 1. The pressure release valve 4 is provided in the introduction pipe 2a. Meanwhile, the inlet of the discharge pipe 2b is open at the lower part in the liquid vessel 1. The outlet of the discharge pipe 2b is open at the liquid phase portion in the filtered containment venting vessel 6. The isolation valve 5 is provided in the discharge pipe 2b.

Next, the trapping method of organic iodine using the trapping apparatus 400 will be described in detail.

In the trapping apparatus 400, the non-volatile liquid L1 in the liquid vessel 1 is heated by the heat in the dry well 11 of the nuclear reactor container vessel 10, the gas (fluid) containing organic iodine in the wet well 12 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine from the liquid vessel 1 to the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When a nuclear reactor accident occurs, the high-temperature and high-pressure gas is released into the nuclear reactor container vessel 10, and when the pressure inside the wet well 12 exceeds the set pressure, the pressure release valve 4 is opened. When the pressure release valve 4 is opened, the high-temperature and high-pressure gas in the wet well 12 flows into the liquid vessel 1 through the introduction pipe 2a. The non-volatile liquid L1 prepared in the liquid vessel 1 is further heated by contact with the incoming gas and starts to react with the organic iodine in the gas.

When the pressure in the nuclear reactor container vessel 10 becomes high and it is determined that the wet well 12 needs to be vented, the isolation valve 5 is opened. The isolation valve 5 may be opened at the same time as the pressure release valve 4, or after the pressure release valve 4. When the isolation valve 5 is opened, the non-volatile liquid L1 prepared in the liquid vessel 1 is pushed by the high-temperature and high-pressure gas and sent to the filtered containment venting vessel 6 through the discharge pipe 2b while decomposing organic iodine.

In the filtered containment venting vessel 6, similar to the above-described trapping apparatus 100, radioactive materials contained in the vented gas are trapped by the non-volatile liquid L1, the scrubbing water L2, or the metal filter 7.

According to the trapping apparatus 400 and the trapping method described above, the liquid vessel 1 is installed in the dry well 11 in the nuclear reactor container vessel 10, the non-volatile liquid L1 is heated by the heat of the dry well 11 in the nuclear reactor container vessel 10, and thus, the reaction rate between the non-volatile liquid L1 and organic iodine can be increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 400 and the trapping method described above, the inlet of the introduction pipe 2a is open at the wet well 12 in the nuclear reactor container vessel 10, and thus, organic iodine can be efficiently trapped when venting the non-condensable gas in the wet well 12. In the wet well 12, some of the radioactive materials in the gas are trapped in advance in the pool water, and thus, the venting is performed more safely. Since the liquid vessel 1 is installed in the dry well 11, the heat having higher temperature can be used to heat the non-volatile liquid L1 compared to a case of installing the liquid vessel 1 in the wet well 12.

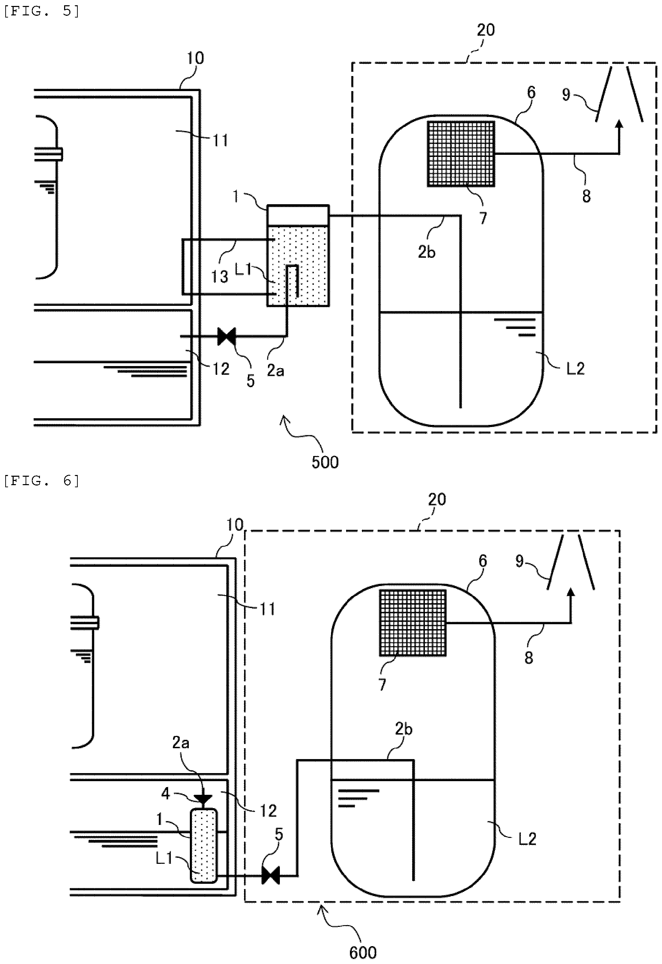

Fig. 5 is a sectional view schematically illustrating another organic iodine an example of trapping apparatus, which is not part of the present invention.

Fig. 5 illustrates the trapping apparatus in which the liquid vessel containing the non-volatile liquid capable of decomposing organic iodine is installed outside the nuclear reactor container vessel, and the non-volatile liquid is heated by the heat in the nuclear reactor container vessel.

As illustrated in Fig. 5, similar to the trapping apparatus 300, a trapping apparatus 500 according to the present embodiment is incorporated in the nuclear reactor container vessel 10 and the filtered containment venting apparatus 20. The trapping apparatus 500 includes the liquid vessel 1, the upstream vent pipes (2a, 2b), the isolation valve 5, the filtered containment venting vessel 6, the metal filter 7, the downstream vent pipe 8, the exhaust pipe 9, and a circulation pipe 13.

The trapping apparatus 500 according to the present embodiment is different from the above-described trapping apparatus 300 in a pipe system related to the introduction pipe 2a. Other apparatus configurations of the trapping apparatus 500 are substantially the same as those of the above-described trapping apparatus 300.

In the trapping apparatus 500, the wet well 12 is connected to the upstream vent pipes (2a, 2b) for venting the gas in the nuclear reactor container vessel 10. The liquid vessel 1 is connected in the middle of the upstream vent pipes (2a, 2b) . The liquid vessel 1 is installed outside the nuclear reactor container vessel 10. The liquid vessel 1 may be installed inside the nuclear reactor building or outside the nuclear reactor building as long as the liquid vessel 1 is outside the nuclear reactor container vessel 10.

The introduction pipe 2a, which configures the upstream vent pipe, is connected to the inlet side of the liquid vessel 1. The inlet of the introduction pipe 2a is open at the wet well 12 in the nuclear reactor container vessel 10. The outlet of the introduction pipe 2a is open at the liquid phase portion on the lower part side in the liquid vessel 1. The isolation valve 5 is provided in the introduction pipe 2a.

The discharge pipe 2b, which configures the upstream vent pipe, is connected to the outlet side of the liquid vessel 1. The inlet of the discharge pipe 2b is open at the gas phase portion on the upper part side in the liquid vessel 1. The other end of the discharge pipe 2b is connected to the filtered containment venting vessel 6. The outlet of the discharge pipe 2b is open at the liquid phase portion in the filtered containment venting vessel 6.

According to this type of pipe system, the liquid vessel 1 can function as the wet type filter. Similar to the above-described trapping apparatus 300, the circulation pipe 13 forms a closed annular flow path from the liquid vessel 1 through the dry well 11 of the nuclear reactor container vessel 10 and back to the liquid vessel 1.

Next, the trapping method of organic iodine using the trapping apparatus 500 will be described in detail.

In the trapping apparatus 500, the non-volatile liquid L1 in the liquid vessel 1 is heated by the heat in the dry well 11 of the nuclear reactor container vessel 10, the gas (fluid) containing organic iodine in the wet well 12 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the liquid vessel 1.

When high-temperature and high-pressure steam (gas) is released into the nuclear reactor container vessel 10 during a nuclear reactor accident, the temperature and pressure inside the nuclear reactor container vessel 10 increases. Although the liquid vessel 1 is installed outside the nuclear reactor container vessel 10, the non-volatile liquid L1 in the circulation pipe 13 that passes through the nuclear reactor container vessel 10 is heated. Therefore, the non-volatile liquid L1 is heated by the heat in the nuclear reactor container vessel 10 while naturally circulating between the liquid vessel 1 and the nuclear reactor container vessel 10 through the circulation pipe 13.

When it is determined that the wet well 12 needs to be vented during a nuclear reactor accident, the isolation valve 5 is opened. When the isolation valve 5 is opened, the high-temperature and high-pressure gas in the wet well 12 flows into the liquid vessel 1 through the introduction pipe 2a. The non-volatile liquid L1 prepared in the liquid vessel 1 is further heated by contact with the incoming gas and starts to react with the organic iodine in the gas.

In the liquid vessel 1, similar to the above-described trapping apparatus 300, the radioactive materials contained in the vented gas are trapped by the non-volatile liquid L1. In the filtered containment venting vessel 6, similar to the above-described trapping apparatus 200, the radioactive materials that are not trapped in the liquid phase in the liquid vessel 1 and released to the gas phase are trapped by the scrubbing water L2 or the metal filter 7.

According to the trapping apparatus 500 and the trapping method described above, the liquid vessel 1 is installed outside the nuclear reactor container vessel 10, the non-volatile liquid L1 is heated by the heat in the nuclear reactor container vessel 10 through the circulation pipe 13, and thus, the reaction rate between the non-volatile liquid L1 and organic iodine can be increased during venting without providing a place for installing the liquid vessel 1 in the nuclear reactor container vessel 10. Since the non-volatile liquid L1 is preheated before coming into contact with a large amount of organic iodine, and heated during the reaction, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 500 and the trapping method described above, the outlet of the introduction pipe 2a is open at the liquid phase portion on the lower part side in the liquid vessel 1, and the inlet of the discharge pipe 2b is open at the gas phase portion on the upper part side in the liquid vessel 1, and thus, similar to the above-described trapping apparatus 300, the trapping can be continued in the liquid vessel 1. Since the non-volatile liquid L1 in the liquid vessel 1 is heated entirely by natural circulation, there is no need for forced circulation by a pump and the like, and high trapping efficiency can be obtained even when the power source is lost. Since the agitation is performed by natural circulation, the non-volatile liquid L1 and organic iodine can be reacted efficiently.

Fig. 6 is a sectional view schematically illustrating an example of another organic iodine trapping apparatus, which is not part of the present invention.

Fig. 6 illustrates the trapping apparatus in which the liquid vessel containing the non-volatile liquid capable of decomposing organic iodine is installed in the wet well in the nuclear reactor container vessel, and the non-volatile liquid is heated by the heat in the nuclear reactor container vessel.

As illustrated in Fig. 6, similar to the trapping apparatus 100, a trapping apparatus 600 according to the present embodiment is incorporated in the nuclear reactor container vessel 10 and the filtered containment venting apparatus 20. The trapping apparatus 600 includes the liquid vessel 1, the upstream vent pipes (2a, 2b), the pressure release valve 4, the isolation valve 5, the filtered containment venting vessel 6, the metal filter 7, the downstream vent pipe 8, and the exhaust pipe 9.

The trapping apparatus 600 according to the present embodiment is different from the above-described trapping apparatus 100 in a pipe system related to the installation position of the liquid vessel 1, the introduction pipe 2a, and the discharge pipe 2b. Other apparatus configurations of the trapping apparatus 600 are substantially the same as those of the above-described trapping apparatus 100.

In the trapping apparatus 600, the wet well 12 is connected to the upstream vent pipes (2a, 2b) for venting the gas in the nuclear reactor container vessel 10. The liquid vessel 1 is connected in the middle of the upstream vent pipes (2a, 2b). The liquid vessel 1 is installed in the wet well 12 of the nuclear reactor container vessel 10.

The introduction pipe 2a, which configures the upstream vent pipe, is connected to the inlet side of the liquid vessel 1. The inlet of the introduction pipe 2a is open at the wet well 12 in the nuclear reactor container vessel 10. The outlet of the introduction pipe 2a is open at the upper part in the liquid vessel 1. The pressure release valve 4 is provided in the introduction pipe 2a.

The discharge pipe 2b, which configures the upstream vent pipe, is connected to the outlet side of the liquid vessel 1. The inlet of the discharge pipe 2b is open at the lower part in the liquid vessel 1. The other end of the discharge pipe 2b is connected to the filtered containment venting vessel 6. The outlet of the discharge pipe 2b is open at the liquid phase portion in the filtered containment venting vessel 6. The isolation valve 5 is provided in the discharge pipe 2b.

Next, the trapping method of organic iodine using the trapping apparatus 600 will be described in detail.

In the trapping apparatus 600, the non-volatile liquid L1 in the liquid vessel 1 is heated by the heat in the wet well 12 of the nuclear reactor container vessel 10, the gas (fluid) containing organic iodine in the wet well 12 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine from the liquid vessel 1 to the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the wet well 12 in the nuclear reactor container vessel 10. Therefore, the non-volatile liquid L1 prepared in the liquid vessel 1 is heated by the heat in the wet well 12.

When a nuclear reactor accident occurs, the high-temperature and high-pressure gas is released into the nuclear reactor container vessel 10, and when the pressure inside the wet well 12 exceeds the set pressure, the pressure release valve 4 is opened. When the pressure release valve 4 is opened, the high-temperature and high-pressure gas in the wet well 12 flows into the liquid vessel 1 through the introduction pipe 2a. The non-volatile liquid L1 prepared in the liquid vessel 1 is further heated by contact with the incoming gas and starts to react with the organic iodine in the gas.

When the pressure in the nuclear reactor container vessel 10 becomes high and it is determined that the wet well 12 needs to be vented, the isolation valve 5 is opened. The isolation valve 5 may be opened at the same time as the pressure release valve 4, or after the pressure release valve 4. When the isolation valve 5 is opened, the non-volatile liquid L1 prepared in the liquid vessel 1 is pushed by the high-temperature and high-pressure gas and sent to the filtered containment venting vessel 6 through the discharge pipe 2b while decomposing organic iodine.

In the filtered containment venting vessel 6, similar to the above-described trapping apparatus 100, radioactive materials contained in the vented gas are trapped by the non-volatile liquid L1, the scrubbing water L2, or the metal filter 7.

According to the trapping apparatus 600 and the trapping method described above, the liquid vessel 1 is installed in the wet well 12 in the nuclear reactor container vessel 10, the non-volatile liquid L1 is heated by the heat of the wet well 12 in the nuclear reactor container vessel 10, and thus, the reaction rate between the non-volatile liquid L1 and organic iodine can be increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 600 and the trapping method described above, the inlet of the introduction pipe 2a is open at the wet well 12 in the nuclear reactor container vessel 10, and thus, organic iodine can be efficiently trapped when venting the non-condensable gas in the wet well 12. Since the liquid vessel 1 is installed in the wet well 12, it is possible to avoid exposing the liquid vessel 1 or the non-volatile liquid L1 to extremely high temperatures, compared to a case of installing the liquid vessel 1 in the dry well 11.

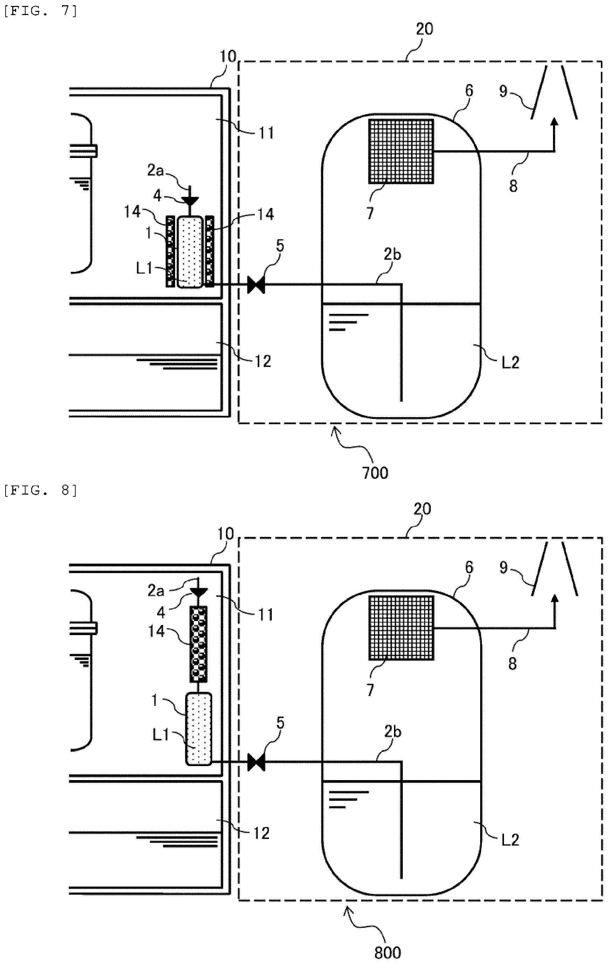

Fig. 7 is a sectional view schematically illustrating an example of the organic iodine trapping apparatus according to the present invention.

Fig. 7 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel and the reaction heat of the fluid in the nuclear reactor container vessel.

As illustrated in Fig. 7, similar to the trapping apparatus 100, a trapping apparatus 700 according to the present embodiment is incorporated in the nuclear reactor container vessel 10 and the filtered containment venting apparatus 20. The trapping apparatus 700 includes the liquid vessel 1, the upstream vent pipes (2a, 2b), the pressure release valve 4, the isolation valve 5, the filtered containment venting vessel 6, the metal filter 7, the downstream vent pipe 8, the exhaust pipe 9, and a reactor 14.

The trapping apparatus 700 according to the present embodiment is different from the above-described trapping apparatus 100 in that the reactor 14 that generates the reaction heat is provided around the liquid vessel 1. Other apparatus configurations of the trapping apparatus 700 are substantially the same as those of the above-described trapping apparatus 100.

As the reactor 14, a device that supports a reactant that reacts with the substance released into the nuclear reactor container vessel 10, that is, a device that generates the reaction heat by causing the exothermic reaction of the gas (fluid) released into the nuclear reactor container vessel 10, is used. As a reactant, any substance that reacts with any substance released into the nuclear reactor container vessel 10 can be used as long as the substance causes the exothermic reaction, but in particular, a substance that generates heat by reacting with hydrogen or vapor is preferably used. As reactants, for example, hydrogen recombination catalyst or metal-oxide catalyst that generates water by the reaction of hydrogen with oxygen, ammonia synthesis catalyst that generates ammonia by the reaction of hydrogen with nitrogen, hydrogen storage alloy, and the like can be used.

Examples of the hydrogen recombination catalyst include catalysts with metals such as palladium and platinum attached to a carrier. Examples of the metal-oxide catalyst include catalysts containing metals such as lithium, sodium, magnesium, calcium, iron, nickel, copper, strontium, silver, and cerium. Examples of the ammonia synthesis catalyst include catalysts using iron, molybdenum, ruthenium, and osmium as active metals. Examples of hydrogen storage alloy include alloys containing lithium, magnesium, titanium, iron, nickel, and lanthanum.

In the trapping apparatus 700, an indoor installation type device is disposed as the reactor 14 to surround the side surface of the liquid vessel 1. However, as long as the reactor 14 is an indoor installation type, there are no restrictions on the arrangement, number of installations, shape, or reaction method. The non-volatile liquid L1 in the liquid vessel 1 may be heated by using any of heat conduction from the reactor 14 to the liquid vessel 1, heat transfer from the gas heated by the exothermic reaction to the liquid vessel 1, and the like.

Examples of the indoor installation type reactor 14 include a chimney type in which the reactants are disposed inside a cylindrical vessel and a gas passage is provided at the center, a parallel type in which a plurality of reactants are disposed at intervals in a tubular vessel and a gas passage is provided between the reactants adjacent to each other, or the like. Gas flows into the vessel containing the reactant from the lower side of the gas passage and comes into contact with the surrounding reactant to cause the exothermic reaction. The heated gas generates an upward flow in the gas passage and is discharged from the upper side of the gas passage.

As the reactor 14, a cartridge vessel that is easily replaced and filled with the reactant is preferably used. The liquid vessel 1 can also have a structure in which a jacket type heat exchanger is provided, and the gas discharged from the gas passage of the reactor 14 can be drawn into the heat exchanger provided around the liquid vessel 1. In a case where the reactor 14 is installed around the liquid vessel 1, it is preferable to install a blower to send the gas into the gas passage of the reactor 14.

Next, the trapping method of organic iodine according to the present invention, using the trapping apparatus 700 will be described in detail.

In the trapping apparatus 700, the non-volatile liquid L1 in the liquid vessel 1 is heated by the heat in the dry well 11 of the nuclear reactor container vessel 10 and the reaction heat of the fluid in the nuclear reactor container vessel, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine from the liquid vessel 1 to the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When the temperature of the core increases during a nuclear reactor accident, the water which is a coolant reacts with zirconium and the like in a fuel rod cladding tube to generate a large amount of hydrogen. The hydrogen or vapor released into the nuclear reactor container vessel 10 comes into contact with the predetermined reactants in the reactor 14 to cause the exothermic reaction, and thus, the non-volatile liquid L1 in the liquid vessel 1 is heated to a higher temperature.

When a nuclear reactor accident occurs, the high-temperature and high-pressure gas is released into the nuclear reactor container vessel 10, and when the pressure inside the dry well 11 exceeds the set pressure, the pressure release valve 4 is opened. When the pressure release valve 4 is opened, the high-temperature and high-pressure gas in the dry well 11 flows into the liquid vessel 1 through the introduction pipe 2a. The non-volatile liquid L1 prepared in the liquid vessel 1 is further heated by contact with the incoming gas and starts to react with the organic iodine in the gas.

When the pressure inside the nuclear reactor container vessel 10 becomes high and it is determined that the dry well 11 needs to be vented, the isolation valve 5 is opened. The isolation valve 5 may be opened at the same time as the pressure release valve 4, or after the pressure release valve 4. When the isolation valve 5 is opened, the non-volatile liquid L1 prepared in the liquid vessel 1 is pushed by the high-temperature and high-pressure gas and sent to the filtered containment venting vessel 6 through the discharge pipe 2b while decomposing organic iodine.

In the filtered containment venting vessel 6, similar to the above-described trapping apparatus 100, radioactive materials contained in the vented gas are trapped by the non-volatile liquid L1, the scrubbing water L2, or the metal filter 7.

According to the trapping apparatus 700 and the trapping method described above, the liquid vessel 1 is installed in the dry well 11 in the nuclear reactor container vessel 10, the non-volatile liquid L1 is heated by the heat of the dry well 11 in the nuclear reactor container vessel 10 and the reaction heat of the fluid in the nuclear reactor container vessel 10, and thus, the reaction rate between the non-volatile liquid L1 and organic iodine can be further increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 700 and the trapping method described above, the reactor 14 that generates the reaction heat is provided around the liquid vessel 1, and thus, when preheating the non-volatile liquid L1 with the reaction heat, the degree of freedom in the installation of the reactor 14 or the degree of freedom in the filling state of the reactant in the reactor 14 increases. When the reactor 14 is disposed around the liquid vessel 1 and the area in the vicinity of the inlet of the introduction pipe 2a is an open space, it is possible to avoid a large flow resistance to the vented gas.

Fig. 8 is a sectional view schematically illustrating another organic iodine trapping apparatus, which is not part of the present invention.

Fig. 8 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel and the reaction heat of the fluid in the nuclear reactor container vessel.

As illustrated in Fig. 8, similar to the trapping apparatus 700, a trapping apparatus 800 according to the present embodiment is incorporated in the nuclear reactor container vessel 10 and the filtered containment venting apparatus 20. The trapping apparatus 800 includes the liquid vessel 1, the upstream vent pipes (2a, 2b), the pressure release valve 4, the isolation valve 5, the filtered containment venting vessel 6, the metal filter 7, the downstream vent pipe 8, the exhaust pipe 9, and a reactor 14.

The trapping apparatus 800 according to the present embodiment is different from the above-described trapping apparatus 700 in that the reactor 14 that generates the reaction heat is provided in the middle of the introduction pipe 2a. Other apparatus configurations of the trapping apparatus 800 are substantially the same as those of the above-described trapping apparatus 700.

In the trapping apparatus 800, an in-line type device is connected to the middle of the introduction pipe 2a as the reactor 14. However, as long as the reactor 14 is an in-line type, there are no restrictions on the arrangement, number of connections, shape, or reaction method. The non-volatile liquid L1 in the liquid vessel 1 may be heated by using any of heat conduction from the reactor 14 to the liquid vessel 1, heat transfer from the gas heated by the exothermic reaction in the reactor 14, and the like.

Examples of the in-line type reactor 14 include a reactor in which the tubular vessel is filled with bulky reactant, a reactor in which a cartridge filled with reactant is embedded in the tubular vessel, a reactor in which reactants formed in the tubular vessel are laminated and disposed, and the like. Gas flows into the tubular vessel from the one end side of the gas passage and comes into contact with the surrounding reactant to cause the exothermic reaction. The heated gas is discharged from the other end side of the gas passage. A plurality of in-line type reactors 14 can also be connected to the liquid vessel 1 in parallel.

Next, the trapping method of organic iodine using the trapping apparatus 800 will be described in detail.

In the trapping apparatus 800, the non-volatile liquid L1 in the liquid vessel 1 is heated by the heat in the dry well 11 of the nuclear reactor container vessel 10 and the reaction heat of the fluid in the nuclear reactor container vessel, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine from the liquid vessel 1 to the filtered containment venting vessel 6 while being further heated by the reaction heat.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When the temperature of the core increases during a nuclear reactor accident, the water which is a coolant reacts with zirconium and the like in a fuel rod cladding tube to generate a large amount of hydrogen. High-temperature and high-pressure gas is released into the nuclear reactor container vessel 10, and when the pressure inside the dry well 11 exceeds the set pressure, the pressure release valve 4 is opened. When the pressure release valve 4 is opened, the gas containing hydrogen or vapor in the dry well 11 flows into the reactor 14 through the introduction pipe 2a. Since hydrogen or vapor causes the exothermic reaction when coming into contact with a predetermined reactant in the reactor 14, the gas flowing into the reactor 14 flows into the liquid vessel 1 having a higher temperature. The non-volatile liquid L1 prepared in the liquid vessel 1 is further heated by the gas and starts to react with the organic iodine in the gas.

When the pressure in the nuclear reactor container vessel 10 becomes high and it is determined that the dry well 11 needs to be vented during a nuclear reactor accident, the isolation valve 5 is opened. The isolation valve 5 may be opened at the same time as the pressure release valve 4, or after the pressure release valve 4. When the isolation valve 5 is opened, the non-volatile liquid L1 prepared in the liquid vessel 1 is pushed by the high-temperature and high-pressure gas and sent to the filtered containment venting vessel 6 through the discharge pipe 2b while decomposing organic iodine.

In the filtered containment venting vessel 6, similar to the above-described trapping apparatus 700, radioactive materials contained in the vented gas are trapped by the non-volatile liquid L1, the scrubbing water L2, or the metal filter 7.

According to the trapping apparatus 800 and the trapping method described above, the liquid vessel 1 is installed in the dry well 11 in the nuclear reactor container vessel 10, the non-volatile liquid L1 is heated by the heat of the dry well 11 in the nuclear reactor container vessel 10 and the reaction heat of the fluid in the nuclear reactor container vessel 10, and thus, the reaction rate between the non-volatile liquid L1 and organic iodine can be further increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 800 and the trapping method described above, the reactor 14 that generates the reaction heat is provided in the middle of the introduction pipe 2a, and thus, the substance in the nuclear reactor container vessel 10 that causes the exothermic reaction can flow into the reactor 14 by the pressure difference between the inside and outside of the nuclear reactor container vessel 10. Since there is no need to install a blower or the like to send the gas, high trapping efficiency can be obtained even when the power source is lost.

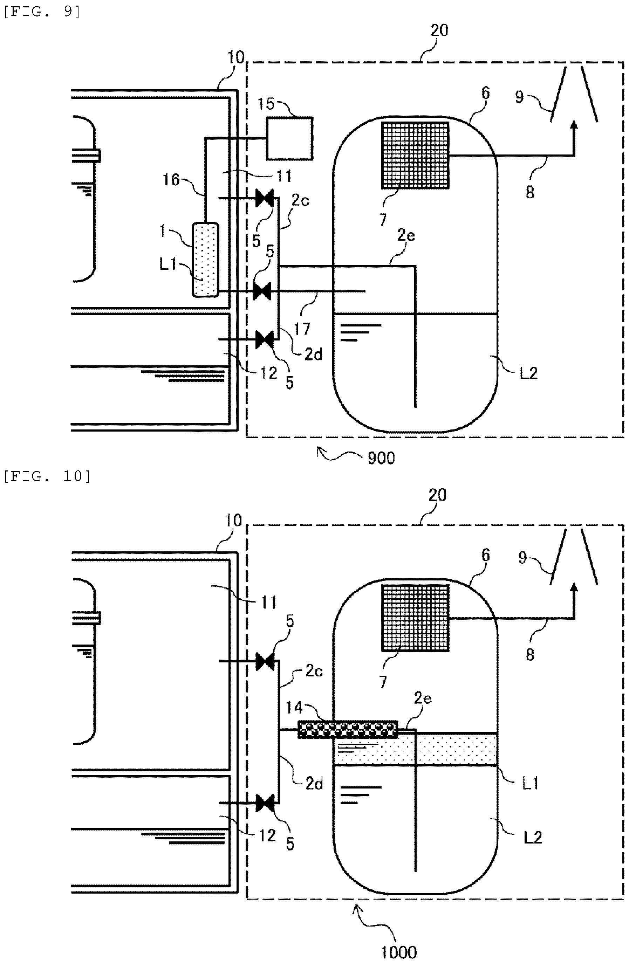

Fig. 9 is a sectional view schematically illustrating an example of another organic iodine trapping apparatus, which is not part of the present invention.

Fig. 9 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel.

As illustrated in Fig. 9, similar to the trapping apparatus 100, a trapping apparatus 900 according to the present embodiment is incorporated in the nuclear reactor container vessel 10 and the filtered containment venting apparatus 20. The trapping apparatus 900 includes the liquid vessel 1, the upstream vent pipes (2c, 2d, 2e), the isolation valve 5, the filtered containment venting vessel 6, the metal filter 7, the downstream vent pipe 8, the exhaust pipe 9, a gas injection device 15, a gas injection pipe 16, and a liquid injection pipe 17.

The trapping apparatus 900 according to the present embodiment is different from the above-described trapping apparatus 100 in that the gas injection device 15 is connected to the liquid vessel 1 and in a pipe system related to the upstream vent pipes (2c, 2d, 2e). Other apparatus configurations of the trapping apparatus 900 are substantially the same as those of the above-described trapping apparatus 100.

In the trapping apparatus 900, the dry well 11 is connected to the dry vent pipe 2c for venting the gas in the dry well 11 . The dry vent pipe 2c is provided with the isolation valve 5. The wet well 12 is connected to the wet vent pipe 2d used for venting the gas in the wet well 12. The wet vent pipe 2d is provided with the isolation valve 5.

The dry vent pipe 2c and the wet vent pipe 2d merge into the inlet pipe 2e connected downstream, and the other end of the inlet pipe 2e is connected to the filtered containment venting vessel 6. The upstream vent pipes (2c, 2d, 2e) are pipes for venting the gas (fluid) in the nuclear reactor container vessel 10, and are used for introducing the gas (fluid) containing organic iodine into the non-volatile liquid L1 injected into the filtered containment venting vessel 6.

The liquid vessel 1 is installed in the dry well 11 of the nuclear reactor container vessel 10. The gas injection device 15 is connected to the inlet side of the liquid vessel 1 through the gas injection pipe 16. The gas injection device 15 is installed outside the nuclear reactor container vessel 10. The outlet of the gas injection pipe 16 is open at the upper part in the liquid vessel 1.

The liquid injection pipe 17 is connected to the outlet side of the liquid vessel 1. The inlet of the liquid injection pipe 17 is open at the lower part in the liquid vessel 1. The other end of the liquid injection pipe 17 is connected to the filtered containment venting vessel 6. The outlet of the liquid injection pipe 17 is open at the liquid phase portion in the filtered containment venting vessel 6. The liquid injection pipe 17 is used to inject the non-volatile liquid L1 prepared in the liquid vessel 1 into the filtered containment venting vessel 6. The isolation valve 5 is provided in the liquid injection pipe 17.

The gas injection device 15 is a device for injecting pressurized gas into the liquid vessel 1. The gas injection pipe 16 is used to send the pressurized gas from the gas injection device 15 to the liquid vessel 1. By injecting the pressurized gas into the liquid vessel 1, the non-volatile liquid L1 prepared in the liquid vessel 1 can be forcibly injected into the filtered containment venting vessel 6.

Examples of the gas to be injected include inert gas, such as nitrogen gas or argon gas, or dry air. As the gas to be injected, it is preferable to use the inert gas from the viewpoint of avoiding oxidative degradation or hydrolysis of the non-volatile liquid L1.

Next, the trapping method of organic iodine using the trapping apparatus 900 will be described in detail.

In the trapping apparatus 900, the non-volatile liquid L1 in the liquid vessel 1 is heated by the heat in the dry well 11 of the nuclear reactor container vessel 10, the gas (fluid) containing at least one organic iodine in the dry well 11 and in the wet well 12 of the nuclear reactor container vessel 10 is passed through the heated non-volatile liquid L1, and the organic iodine contained in the gas is decomposed and trapped in the non-volatile liquid L1. The non-volatile liquid L1 is preheated in the liquid vessel 1 and then transferred to the filtered containment venting vessel 6, and decomposes organic iodine in the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When the pressure in the nuclear reactor container vessel 10 becomes high and it is determined that the dry well 11 or the wet well 12 needs to be vented, the isolation valve 5 of the liquid injection pipe 17 is opened. The gas injection device 15 starts pumping the gas. When the isolation valve 5 of the liquid injection pipe 17 is opened, the non-volatile liquid L1 prepared in the liquid vessel 1 is pushed by the gas injected from the gas injection device 15 and is sent to the filtered containment venting vessel 6 through the liquid injection pipe 17 under the pressure of the gas pressurized by the gas injection device 15.

When it is determined that the dry well 11 or the wet well 12 needs to be vented during a nuclear reactor accident, at least one of the isolation valves 5 in the dry vent pipe 2c or the isolation valve 5 in the wet vent pipe 2d will be opened. These isolation valves 5 may be opened at the same time as the isolation valve 5 of the liquid injection pipe 17, or after the isolation valve 5 of the liquid injection pipe 17. When the isolation valve 5 is opened, the high-temperature and high-pressure gas in the dry well 11 and the high-temperature and high-pressure gas in the wet well 12 are sent to the filtered containment venting vessel 6 through the upstream vent pipes (2c, 2d, 2e).

In the filtered containment venting vessel 6, similar to the above-described trapping apparatus 100, radioactive materials contained in the vented gas are trapped by the non-volatile liquid L1, the scrubbing water L2, or the metal filter 7.

In Fig. 9, only one system is provided in which the liquid vessel 1, the gas injection device 15, the gas injection pipe 16, and the liquid injection pipe 17 are provided, but a plurality of such systems can be provided. For example, some of the systems can be used when a nuclear reactor accident occurs, and the remaining systems can also be used during restoration of accident where the temperature inside the filtered containment venting vessel 6 tends to drop.

According to the trapping apparatus 900 and the trapping method described above, the liquid vessel 1 is installed in the dry well 11 in the nuclear reactor container vessel 10, the non-volatile liquid L1 is heated by the heat of the dry well 11 in the nuclear reactor container vessel 10, and thus, the reaction rate between the non-volatile liquid L1 and organic iodine can be increased during venting. Since the non-volatile liquid L1 is preheated before coming into contact with a large amount of organic iodine, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 900 and the trapping method described above, the gas in the nuclear reactor container vessel 10 is sent to the filtered containment venting vessel 6 only through the upstream vent pipes (2c, 2d, 2e) without passing through the liquid vessel 1, and thus, it is possible to avoid a large flow resistance to the vented gas. Since the gas injection device 15 is provided, the non-volatile liquid L1 can be forcibly injected into the filtered containment venting vessel 6 without using the pressure difference between the inside and outside of the nuclear reactor container vessel 10, and the degree of freedom of the hydraulic head of the non-volatile liquid L1 to be used can be increased.

Fig. 10 is a sectional view schematically illustrating an example of another organic iodine trapping apparatus, which is not part of the present invention.

Fig. 10 illustrates the trapping apparatus in which the liquid vessel containing the non-volatile liquid capable of decomposing organic iodine is installed outside the nuclear reactor container vessel, and the non-volatile liquid is heated by the reaction heat of the fluid in the nuclear reactor container vessel.

As illustrated in Fig. 10, a trapping apparatus 1000 according to the embodiment is incorporated in the filtered containment venting apparatus 20. Similar to the above-described trapping apparatus 800, the trapping apparatus 1000 includes the upstream vent pipes (2c, 2d, 2e), the isolation valve 5, the filtered containment venting vessel 6, the metal filter 7, the downstream vent pipe 8, the exhaust pipe 9, and the reactor 14.

The trapping apparatus 1000 according to the present embodiment is different from the above-described trapping apparatus 800 in that the liquid vessel 1 is not provided, the non-volatile liquid L1 is prepared in the filtered containment venting vessel 6, and the reactor 14 that generates the reaction heat is provided in the middle of the vent pipes (2c, 2d, 2e) . Other apparatus configurations of the trapping apparatus 1000 are substantially the same as those of the above-described trapping apparatus 800.

In the trapping apparatus 1000, the dry well 11 is connected to the dry vent pipe 2c for venting the gas in the dry well 11. The dry vent pipe 2c is provided with the isolation valve 5. The wet well 12 is connected to the wet vent pipe 2d used for venting the gas in the wet well 12. The wet vent pipe 2d is provided with the isolation valve 5.

The dry vent pipe 2c and the wet vent pipe 2d merge into the inlet pipe 2e connected downstream, and the other end of the inlet pipe 2e is connected to the filtered containment venting vessel 6. The upstream vent pipes (2c, 2d, 2e) are pipes for venting the gas (fluid) in the nuclear reactor container vessel 10, and are used for introducing the gas (fluid) containing organic iodine into the non-volatile liquid L1 prepared in the filtered containment venting vessel 6.

The non-volatile liquid L1 and the scrubbing water L2 are prepared in the filtered containment venting vessel 6. As the non-volatile liquid L1, a liquid with a specific gravity smaller than that of the scrubbing water L2 is preferably used. With such a liquid, the non-volatile liquid L1 is phase-separated from the scrubbing water L2 to form the upper layer, and thus, the volatilization of organic iodine or secondarily generated elemental iodine can be reliably prevented by the non-volatile liquid L1 in the upper layer. At the outlet of the inlet pipe 2e, a scrubber nozzle (not illustrated) formed by, for example, multiple Venturi nozzles, can be attached.

In the trapping apparatus 1000, an in-line type device is connected to the middle of the inlet pipe 2e as the reactor 14. However, as long as the reactor 14 is an in-line type, there are no restrictions on the arrangement, number of connections, shape, or reaction method. The non-volatile liquid L1 in the filtered containment venting vessel 6 may be heated by using any of heat conduction from the reactor 14, heat transfer from the gas heated by the exothermic reaction in the reactor 14, and the like.

As the in-line type reactor 14, similar to the above-described trapping apparatus 800, a reactor in which the tubular vessel is filled with bulky reactant, a reactor in which a cartridge filled with reactant is embedded in the tubular vessel, a reactor in which reactants formed in the tubular vessel are laminated and disposed, and the like, can be used. A plurality of in-line type reactors 14 can be installed in parallel and attached to the filtered containment venting vessel 6. The in-line reactors 14 can also be disposed at a position which is in contact with the liquid phase portion or a position submerged in the liquid phase portion in the filtered containment venting vessel 6.

Next, the trapping method of organic iodine using the trapping apparatus 1000 will be described in detail.

In the trapping apparatus 1000, the non-volatile liquid L1 in the filtered containment venting vessel 6 is heated by the reaction heat of the fluid in the nuclear reactor container vessel, the gas (fluid) containing at least one organic iodine in the dry well 11 and in the wet well 12 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. When the temperature of the core increases, the water which is a coolant reacts with zirconium and the like in a fuel rod cladding tube to generate a large amount of hydrogen.

When the pressure in the nuclear reactor container vessel 10 becomes high and it is determined that the dry well 11 or the wet well 12 needs to be vented, at least one of the isolation valves 5 in the dry vent pipe 2c or the isolation valve 5 in the wet vent pipe 2d will be opened. When the isolation valve 5 is opened, the gas containing hydrogen or vapor in the dry well 11 or the gas containing hydrogen or vapor in the wet well 12 flow into the reactor 14 through the upstream vent pipes (2c, 2d, 2e) . Since hydrogen or vapor causes the exothermic reaction when coming into contact with a predetermined reactant that fills the reactor 14, the gas flowing into the reactor 14 flows into the filtered containment venting vessel 6 having a higher temperature. The non-volatile liquid L1 prepared in the filtered containment venting vessel 6 is further heated by the gas and starts to react with the organic iodine in the gas.

In the filtered containment venting vessel 6, the organic iodine contained in the vented gas reacts with the non-volatile liquid L1 and is decomposed into iodine ions and organic matter. The dissociated iodine ions, aerosols contained in the vented gas, inorganic iodine and the like are trapped by dissolution and coagulation in the non-volatile liquid L1 or the scrubbing water L2. Aerosols that are not trapped in the liquid phase and are released into the gas phase are trapped in the metal filter 7. After this, the gas from which radioactive materials are removed is released into the environment through the exhaust pipe 9.

According to the trapping apparatus 1000 and the trapping method described above, the non-volatile liquid L1 is heated by the reaction heat of the fluid in the nuclear reactor container vessel 10, and thus, the reaction rate between the non-volatile liquid L1 and organic iodine can be increased during venting. The non-volatile liquid L1 can be preheated by the reaction heat before coming into contact with a large amount of organic iodine, and even when the temperature in the nuclear reactor container vessel 10 is not sufficiently high, the non-volatile liquid L1 can be heated to a high temperature in a case where the hydrogen concentration or the vapor concentration is high, and thus, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 1000 and the trapping method described above, the reactor 14 that generates the reaction heat is provided in the middle of the inlet pipe 2e, and thus, the substance in the nuclear reactor container vessel 10 that causes the exothermic reaction can flow into the reactor 14 by the pressure difference between the inside and outside of the nuclear reactor container vessel 10. Since there is no need to install a blower or the like to send the gas, high trapping efficiency can be obtained even when the power source is lost. Since the liquid vessel 1 is not required, the reaction rate between the non-volatile liquid L1 and organic iodine can be increased without providing a place for installing the liquid vessel 1 inside and outside the nuclear reactor container vessel 10.

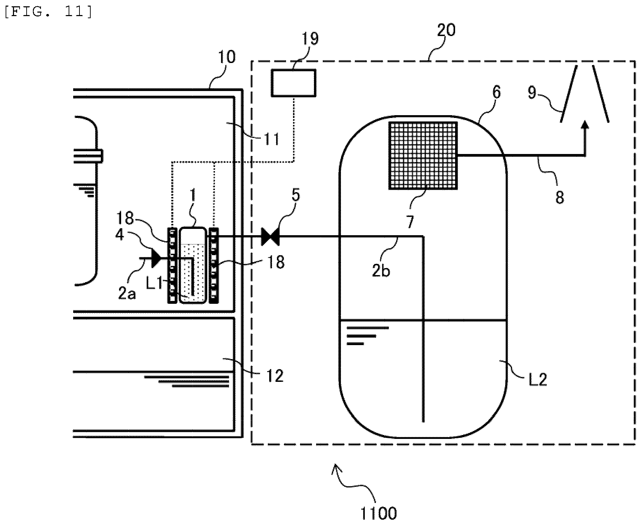

Fig. 11 is a sectional view schematically illustrating an example of the organic iodine trapping apparatus according to the present invention.

Fig. 11 illustrates the trapping apparatus in which the liquid vessel containing the non-volatile liquid capable of decomposing organic iodine is installed in the dry well in the nuclear reactor container vessel, and the non-volatile liquid is heated by the heat in the nuclear reactor container vessel.

As illustrated in Fig. 11, similar to the trapping apparatus 200, a trapping apparatus 1100 according to the present embodiment is incorporated in the nuclear reactor container vessel 10 and the filtered containment venting apparatus 20. The trapping apparatus 1100 includes the liquid vessel 1, the upstream vent pipes (2a, 2b), the pressure release valve 4, the isolation valve 5, the filtered containment venting vessel 6, the metal filter 7, the downstream vent pipe 8, and the exhaust pipe 9.

The trapping apparatus 1100 according to the present embodiment is different from the above-described trapping apparatus 200 in that a heater 18 installed around the liquid vessel 1 and an emergency power source 19 connected to the heater 18 are provided. Other apparatus configurations of the trapping apparatus 1100 are substantially the same as those of the above-described trapping apparatus 200.

The heater 18 is a device that is driven by the emergency power source 19 to generate heat, and is included to further heat the non-volatile liquid L1 heated by the heat in the nuclear reactor container vessel 10. The heater 18 may be controlled to have a constant output or a variable output. The heater 18 can be controlled, for example, such that the non-volatile liquid L1 is maintained at a predetermined temperature or higher.

As the heater 18, various types of heating devices such as red heat radiation heaters such as halogen heaters, panel heaters such as ceramic heaters and quartz heaters, liquid-filled heat radiation heaters such as oil heaters, fan heaters such as electric fan heaters, and convection heaters such as air conditioners and duct heaters, can be used.

In the trapping apparatus 1100, an indoor installation type device is disposed as the heater 18 to surround the side surface of the liquid vessel 1. However, as long as the heater 18 is an indoor installation type, there are no restrictions on the arrangement, number of installations, shape, or heating method. The non-volatile liquid L1 in the liquid vessel 1 may be heated by using any of heat conduction from the heater 18 to the liquid vessel 1, heat transfer from the gas heated by the heater 18 to the liquid vessel 1, and the like.

The emergency power source 19 is a power source that can operate even when a nuclear reactor accident occurs, and can be used to supply power to the heater 18 when the power source is lost. As the emergency power source 19, various types of power sources such as diesel generators, gas turbine generators, or storage batteries can be used. The emergency power source 19 may be a stationary power source that is always connected to the heater 18, or may be a mobile power source such as a power source vehicle that is connected during an emergency.

Next, the trapping method of organic iodine using the trapping apparatus 1100 will be described in detail.

In the trapping apparatus 1100, the non-volatile liquid L1 in the liquid vessel 1 is heated by the heat in the dry well 11 of the nuclear reactor container vessel 10 and the heat generated by the heater 18, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the liquid vessel 1.

When high-temperature and high-pressure steam (gas) is released into the nuclear reactor container vessel 10 during a nuclear reactor accident, the temperature and pressure inside the nuclear reactor container vessel 10 increases. The liquid vessel 1 is installed in the dry well 11 in the nuclear reactor container vessel 10. Therefore, the non-volatile liquid L1 prepared in the liquid vessel 1 is heated by the heat in the dry well 11.

When a nuclear reactor accident occurs, the high-temperature and high-pressure gas is released into the nuclear reactor container vessel 10, and when the pressure inside the dry well 11 exceeds the set pressure, the pressure release valve 4 is opened. When the pressure release valve 4 is opened, the high-temperature and high-pressure gas in the dry well 11 flows into the liquid vessel 1 through the introduction pipe 2a. The non-volatile liquid L1 prepared in the liquid vessel 1 is further heated by contact with the incoming gas and starts to react with the organic iodine in the gas.

When the pressure in the nuclear reactor container vessel 10 becomes high and it is determined that the dry well 11 needs to be vented, the heater 18 is activated. The heater 18 may be activated at the same time as the opening of the pressure release valve 4, may be activated before the opening of the pressure release valve 4, or may be activated after the opening of the pressure release valve 4. When the heater 18 is activated, the non-volatile liquid L1 prepared in the liquid vessel 1 is further heated so as to reach a temperature higher than the temperature in the dry well 11.

In the liquid vessel 1, the organic iodine contained in the vented gas reacts with the non-volatile liquid L1 and is decomposed into iodine ions and organic matter. The dissociated iodine ions, aerosols contained in the vented gas, inorganic iodine and the like are dissolved and trapped in the non-volatile liquid L1. The heating of the non-volatile liquid L1 by the heater 18 may be continuously or intermittently performed while the vented gas flows into the liquid vessel 1.

When the pressure in the nuclear reactor container vessel 10 becomes high and it is determined that the dry well 11 or the liquid vessel 1 needs to be vented, the isolation valve 5 is opened. The isolation valve 5 may be opened at the same time as the activation of the heater 18, or after the activation of the heater 18. When the isolation valve 5 is opened, radioactive materials that are not trapped in the liquid phase in the liquid vessel 1 and released into the gas phase are sent to the filtered containment venting vessel 6 through the discharge pipe 2b.

In the filtered containment venting vessel 6, radioactive materials remaining in the vented gas are trapped by dissolution and coagulation in the scrubbing water L2. Aerosols that are not trapped in the liquid phase and are released into the gas phase are trapped in the metal filter 7. After this, the gas from which radioactive materials are removed is released into the environment through the exhaust pipe 9.

According to the trapping apparatus 1100 and the trapping method described above, the liquid vessel 1 is installed in the dry well 11 in the nuclear reactor container vessel 10, the non-volatile liquid L1 is heated by the heat of the dry well 11 in the nuclear reactor container vessel 10 and the heater 18, and thus, the reaction rate between the non-volatile liquid L1 and organic iodine can be increased during venting. Since the non-volatile liquid L1 is preheated before coming into contact with a large amount of organic iodine, and heated during the reaction, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 1100 and the trapping method described above, the heater 18 connected to the emergency power source 19 is provided around the liquid vessel 1, and thus, the non-volatile liquid L1 can be reliably preheated to the temperature at which a high reaction rate can be obtained even when the temperature in the nuclear reactor container vessel 10 is not sufficiently high. The heater 18 can heat the non-volatile liquid L1 even when the power source is lost or when restoring from accident where the temperature inside the nuclear reactor container vessel 10 decreases, and thus, the trapping efficiency can be maintained over a wider range of time periods.

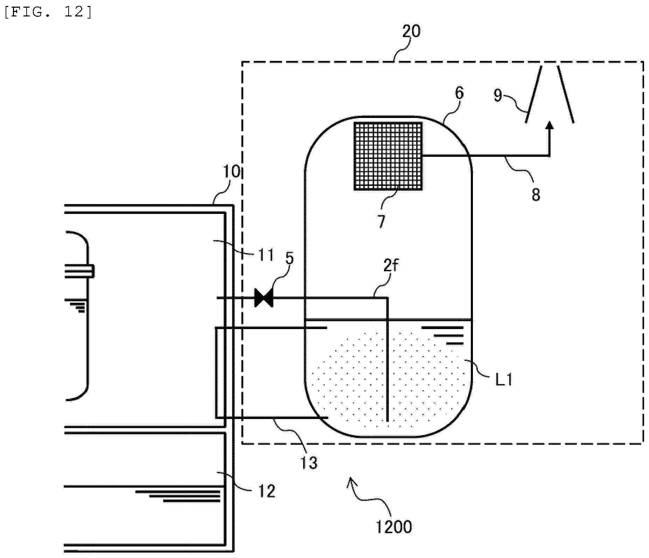

Fig. 12 is a sectional view schematically illustrating an example of another organic iodine trapping apparatus, which is not part of the present invention.

Fig. 12 illustrates the trapping apparatus in which the liquid vessel containing the non-volatile liquid capable of decomposing organic iodine is installed outside the nuclear reactor container vessel, and the non-volatile liquid is heated by the heat in the nuclear reactor container vessel.

As illustrated in Fig. 12, similar to the trapping apparatus 300, a trapping apparatus 1200 according to the present embodiment is incorporated in the nuclear reactor container vessel 10 and the filtered containment venting apparatus 20. The trapping apparatus 1200 includes the liquid vessel 1, the upstream vent pipe (introduction pipe) 2f, the isolation valve 5, the filtered containment venting vessel 6, the metal filter 7, the downstream vent pipe 8, the exhaust pipe 9, and a circulation pipe 13.

The trapping apparatus 1200 according to the present embodiment is different from the above-described trapping apparatus 300 in that the liquid vessel 1 is not provided and the non-volatile liquid L1 is prepared in the filtered containment venting vessel 6. Other apparatus configurations of the trapping apparatus 1200 are substantially the same as those of the above-described trapping apparatus 300.

In the trapping apparatus 1200, the dry well 11 is connected to the upstream vent pipe 2f for venting the gas in the dry well 11. The other end of the upstream vent pipe 2f is connected to the filtered containment venting vessel 6. The outlet of the upstream vent pipe 2f is open at the liquid phase portion in the filtered containment venting vessel 6.

The upstream vent pipe 2f is used for introducing the gas (fluid) containing organic iodine in the nuclear reactor container vessel 10 into the non-volatile liquid L1. The upstream vent pipe 2f is provided with the isolation valve 5.

The non-volatile liquid L1 is prepared in the filtered containment venting vessel 6. At the outlet of the upstream vent pipe 2f, a scrubber nozzle (not illustrated) formed by, for example, multiple Venturi nozzles, can be attached. A baffle that exerts resistance to the high-temperature and high-pressure gas ejected into the liquid can also be provided.

Similar to the liquid vessel 1 of the above-described trapping apparatus 300, the circulation pipe 13 forms a closed annular flow path from the filtered containment venting vessel 6 through the dry well 11 of the nuclear reactor container vessel 10 and back to the filtered containment venting vessel 6. One end of the circulation pipe 13 is connected to the lower part of the filtered containment venting vessel 6, and the other end is connected to the upper part side thereof. The middle part of the circulation pipe 13 is in the dry well 11 and is laid vertically such that the pipeline follows the vertical direction.

Next, the trapping method of organic iodine using the trapping apparatus 1200 will be described in detail.

In the trapping apparatus 1200, the non-volatile liquid L1 in the filtered containment venting vessel 6 is heated by the heat in the dry well 11 of the nuclear reactor container vessel 10, the gas (fluid) containing organic iodine in the dry well 11 of the nuclear reactor container vessel 10 is passed through the heated non-volatile liquid L1, and the organic iodine contained in the gas is decomposed and trapped in the non-volatile liquid L1. The non-volatile liquid L1 decomposes organic iodine while being heated in the filtered containment venting vessel 6.

When high-temperature and high-pressure steam (gas) is released into the nuclear reactor container vessel 10 during a nuclear reactor accident, the temperature and pressure inside the nuclear reactor container vessel 10 increases. Although the liquid vessel 1 is installed outside the nuclear reactor container vessel 10, the non-volatile liquid L1 in the circulation pipe 13 that passes through the nuclear reactor container vessel 10 is heated. Therefore, the non-volatile liquid L1 is heated by the heat in the nuclear reactor container vessel 10 while naturally circulating between the liquid vessel 1 and the nuclear reactor container vessel 10 through the circulation pipe 13.

When the pressure inside the nuclear reactor container vessel 10 becomes high and it is determined that the dry well 11 needs to be vented, the isolation valve 5 is opened. When the isolation valve 5 is opened, the high-temperature and high-pressure gas in the dry well 11 flows into the filtered containment venting vessel 6 through the upstream vent pipe 2f. The non-volatile liquid L1 prepared in the filtered containment venting vessel 6 is further heated by contact with the incoming gas and starts to react with the organic iodine in the gas.

In the filtered containment venting vessel 6, the organic iodine contained in the vented gas reacts with the non-volatile liquid L1 and is decomposed into iodine ions and organic matter. The dissociated iodine ions, aerosols contained in the vented gas, inorganic iodine and the like are trapped by dissolution and coagulation in the non-volatile liquid L1. Aerosols that are not trapped in the liquid phase and are released into the gas phase are trapped in the metal filter 7. After this, the gas from which radioactive materials are removed is released into the environment through the exhaust pipe 9.

According to the trapping apparatus 1200 and the trapping method described above, the liquid vessel 1 is installed outside the nuclear reactor container vessel 10, the non-volatile liquid L1 is heated by the heat in the nuclear reactor container vessel 10 through the circulation pipe 13, and thus, the reaction rate between the non-volatile liquid L1 and organic iodine can be increased during venting without providing a place for installing the liquid vessel 1 in the nuclear reactor container vessel 10. Since the non-volatile liquid L1 is preheated before coming into contact with a large amount of organic iodine, and heated during the reaction, the trapping efficiency can be increased over a wide range of time periods, including the early stages of venting. Accordingly, it is possible to provide an apparatus and a method capable of efficiently trapping organic iodine in the nuclear reactor container vessel.

According to the trapping apparatus 1200 and the trapping method described above, the non-volatile liquid L1 in the filtered containment venting vessel 6 is heated entirely by natural circulation, and thus, there is no need for forced circulation by a pump and the like, and high trapping efficiency can be obtained even when the power source is lost. Since the agitation is performed by natural circulation, the non-volatile liquid L1 and organic iodine can be reacted efficiently.

Above, the embodiments of the organic iodine trapping apparatus and the organic iodine trapping method according to the present invention have been described, but the present invention is not limited to the above-described embodiments, and includes various modification examples without departing from the scope of the invention, which is defined by the claims. For example, the above-described embodiments of the invention and the exemplary embodiments, which are not part of the invention, are not necessarily limited to those with all of the described configurations. It is also possible to replace some of the configurations of one embodiment with another, or to add other configurations to those of one embodiment. It is also possible to add other configurations, delete configurations, or substitute configurations for some of the configurations in some embodiments.

For example, each of the trapping apparatuses or the trapping methods described above may be applied to both the dry venting and the wet venting. In the above-described trapping apparatuses 100, 200, 800, 900, and 1100, the system of the liquid vessel 1 and the discharge pipe can also be moved to the wet well 12 side to configure the apparatus. The above-described trapping apparatuses 200, 700, 800, 1100, and 1200 can also be applied to venting the wet well 12.

In each of the above-described trapping apparatuses, a plurality of types of mechanisms can be incorporated in one liquid vessel 1 or filtered containment venting vessel 6. For example, among the liquid vessel 1 with the circulation pipe 13 of the trapping apparatuses 300 and 500, the filtered containment venting vessel 6 with the circulation pipe 13 of the trapping apparatus 1200, the indoor installation type reactor 14 of the trapping apparatus 700, the in-line type reactor 14 of the trapping apparatus 800, the gas injection device 15 of the trapping apparatus 900, and the heater 18 of the trapping apparatus 1100, at least one or more of the mechanisms can incorporated in one liquid vessel 1.

In each of the above-described trapping apparatuses, the liquid vessel 1 or the introduction pipe and the discharge pipe system can be provided in a plurality of series . The plurality of series may be configured to be the same mechanisms as each other or different mechanisms from each other.

For example, the first liquid vessel 1 including the indoor installation type reactor 14 and the gas injection device 15 and the second liquid vessel 1 including the in-line type reactor 14 and the heater 18 can be installed in the dry well 11. According to the second liquid vessel 1, the preheated non-volatile liquid L1 can be used while the insufficiency of the reaction heat is compensated by the heater 18. According to the first liquid vessel 1, the non-volatile liquid L1 preheated by using the reaction heat can be injected at the required time by the gas injection device 15.

For example, the first liquid vessel 1 including the heater 18 and the second liquid vessel 1 including the indoor installation type reactor 14 and the in-line type reactor 14 can also be installed in the dry well 11. According to the second liquid vessel 1, the non-volatile liquid L1 can be preheated by making maximum use of the reaction heat. According to the first liquid vessel 1, the non-volatile liquid L1 can be preheated by using the heater 18 even in situations where the reaction heat is insufficient.

For example, the liquid vessel 1 with the circulation pipe 13 of the trapping apparatus 500 can also be provided with the heater 18 and the in-line type reactor 14. According to the liquid vessel 1, the heat exchange with the dry well 11, the reaction heat of hydrogen and vapor in the wet well 12, and the heat of the heater 18 can stably preheat the non-volatile liquid L1 while compensating heat insufficiency for each other.

For example, the filtered containment venting vessel 6 with the circulation pipe 13 of the trapping apparatus 1200 can also be provided with the heater 18 and the in-line type reactor 14. According to the filtered containment venting vessel 6, the heat exchange with the dry well 11, the reaction heat of hydrogen and vapor in the dry well 11, and the heat of the heater 18 can stably preheat the non-volatile liquid L1 while compensating heat insufficiency for each other.

In addition to the non-volatile liquid L1 or the scrubbing water L2, other ionic liquids, interfacial active agent solution, and the like may be used together in each of the trapping apparatuses and trapping methods described above. In addition to the pipes or equipment illustrated in the drawing, other pipes or equipment may be provided in each of the above-described trapping apparatuses. For example, each trapping apparatus can also be provided with a bypass pipe for dry well venting that does not pass through the liquid vessel 1, a bypass pipe for wet well venting that does not pass through the liquid vessel 1, and the like. The circulation pipe 13 may pass through the dry well 11, through the wet well 12, or through both of the wells.

In each of the trapping apparatuses or the trapping methods described above, there is no restriction on the type of nuclear reactor. The nuclear reactor can be applied to various types of nuclear reactors such as boiling water reactor (BWR), advanced boiling water reactor (ABWR), pressurized water reactor (PWR), and the like. Ionic liquids and the like which can be used as the non-volatile liquids L1 have been put into practical use for general industry. Ionic liquid and the like contaminated with radioactive materials can be treated and regenerated using, for example, the method described in JP-T-2003-507185.

### Reference Signs List

1: liquid vessel
2a: upstream vent pipe (introduction pipe)
2b: upstream vent pipe (discharge pipe)
4: pressure release valve
5: isolation valve
6: filtered containment venting vessel
7: metal filter
8: downstream vent pipe
9: exhaust pipe
10: nuclear reactor container vessel
11: dry well
12: wet well
13: circulation pipe
14: reactor
15: gas injection device
16: gas injection pipe
17: liquid injection pipe
18: heater
19: emergency power source
20: filtered containment venting apparatus
L1: non-volatile liquid
L2: scrubbing water
100: trapping apparatus
200: trapping apparatus
300: trapping apparatus
400: trapping apparatus
500: trapping apparatus
600: trapping apparatus
700: trapping apparatus
800: trapping apparatus
900: trapping apparatus
1000: trapping apparatus
1100: trapping apparatus
1200: trapping apparatus

## Claims

1. An organic iodine trapping apparatus that is configured to trap organic iodine in a nuclear reactor container vessel (10), comprising:
a liquid vessel (1) containing a non-volatile liquid (L1) capable of decomposing organic iodine; and
an introduction pipe (2a) for introducing a fluid containing organic iodine in the nuclear reactor container vessel (10) to the non-volatile liquid (L1), wherein
the apparatus is configured to heat the non-volatile liquid (L1) by reaction heat of the fluid in the nuclear reactor container vessel (10), and then to decompose and trap the organic iodine, wherein
the liquid vessel (1) is installed in a dry well (11) or in a wet well (12) in the nuclear reactor container vessel (10), and
the non-volatile liquid (L1) is heated by the heat in the nuclear reactor container vessel (10),
**characterized by**
a reactor (14) around the liquid vessel (1), wherein
the reactor (14) generates the reaction heat by causing an exothermic reaction of the fluid in the nuclear reactor container vessel (10).

2. The organic iodine trapping apparatus according to claim 1, further comprising:
a heater (18) around the liquid vessel (1), wherein
the heater (18) is configured to further heat the non-volatile liquid (L1) heated by the heat in the nuclear reactor container vessel (10).

3. The organic iodine trapping apparatus according to claim 1, further comprising:
a discharge pipe (2b) for discharging the fluid introduced into the non-volatile liquid (L1) from the liquid vessel (1), wherein
an outlet of the introduction pipe (2a) is open at an upper part in the liquid vessel (1), and
an inlet of the discharge pipe (2b) is open at a lower part of the liquid vessel (1).

4. The organic iodine trapping apparatus according to claim 1, further comprising:
a discharge pipe (2b) for discharging the fluid introduced into the non-volatile liquid (L1) from the liquid vessel (1), wherein
an outlet of the introduction pipe (2a) is open at a liquid phase portion in the liquid vessel (1), and
an inlet of the discharge pipe (2b) is open at a gas phase portion of the liquid vessel (1).

5. The organic iodine trapping apparatus according to claim 1, wherein
the inlet of the introduction pipe (2a) is open at the dry well (11) in the nuclear reactor container vessel (10).

6. The organic iodine trapping apparatus according to claim 1, wherein
the inlet of the introduction pipe (2a) is open at the wet well (12) in the nuclear reactor container vessel (10).

7. An organic iodine trapping method for trapping organic iodine in a nuclear reactor container vessel (10) by using the organic iodine trapping apparatus according to one of claims 1 to 6,
**characterized in that**
the method comprises:
heating a non-volatile liquid (L1) capable of decomposing organic iodine by heat in the nuclear reactor container vessel (10) or reaction heat of fluid in the nuclear reactor container vessel (10);
making the fluid containing organic iodine in the nuclear reactor container vessel (10) pass through the heated non-volatile liquid (L1); and
decomposing and trapping the organic iodine in the non-volatile liquid (L1).

## Patentansprüche

1. Vorrichtung zum Einfangen von organischem Iod, die konfiguriert ist, um organisches Iod in einem Kernreaktorbehälterbehälter (10) einzufangen, umfassend:
einen Flüssigkeitsbehälter (1), der eine nichtflüchtige Flüssigkeit (L1) enthält, die in der Lage ist, organisches Iod zu zersetzen; und
ein Einleitungsrohr (2a) zum Einleiten eines Fluids, das organisches Iod enthält, in den Kernreaktorbehälterbehälter (10) in die nichtflüchtige Flüssigkeit (L1), wobei
die Vorrichtung konfiguriert ist, um die nichtflüchtige Flüssigkeit (L1) durch Reaktionswärme des Fluids in dem Kernreaktorbehälterbehälter (10) zu erwärmen und dann das organische Iod zu zersetzen und einzufangen, wobei
der Flüssigkeitsbehälter (1) in einem Trockenbohrloch (11) oder in einem Nassbohrloch (12) in dem Kernreaktorbehälterbehälter (10) installiert ist, und
die nichtflüchtige Flüssigkeit (L1) durch die Wärme in dem Kernreaktorbehälterbehälter (10) erwärmt wird,
**gekennzeichnet durch**
einen Reaktor (14) um den Flüssigkeitsbehälter (1), wobei
der Reaktor (14) die Reaktionswärme erzeugt, indem er eine exotherme Reaktion des Fluids in dem Kernreaktorbehälterbehälter (10) bewirkt.

2. Vorrichtung zum Einfangen von organischem Iod nach Anspruch 1, ferner umfassend:
eine Heizvorrichtung (18) um den Flüssigkeitsbehälter (1), wobei
die Heizvorrichtung (18) konfiguriert ist, um die nichtflüchtige Flüssigkeit (L1), die durch die Wärme in dem Kernreaktorbehälterbehälter (10) erwärmt wird, weiter zu erwärmen.

3. Vorrichtung zum Einfangen von organischem Iod nach Anspruch 1, ferner umfassend:
ein Ablassrohr (2b) zum Ablassen des Fluids, das in die nichtflüchtige Flüssigkeit (L1) eingeleitet wird, aus dem Flüssigkeitsbehälter (1), wobei
ein Auslass des Einleitungsrohrs (2a) an einem oberen Teil in dem Flüssigkeitsbehälter (1) offen ist, und
ein Einlass des Ablassrohrs (2b) an einem unteren Teil des Flüssigkeitsbehälters (1) offen ist.

4. Vorrichtung zum Einfangen von organischem Iod nach Anspruch 1, ferner umfassend:
ein Ablassrohr (2b) zum Ablassen des Fluids, das in die nichtflüchtige Flüssigkeit (L1) eingeleitet wird, aus dem Flüssigkeitsbehälter (1), wobei
ein Auslass des Einleitungsrohrs (2a) an einem Flüssigphasenabschnitt in dem Flüssigkeitsbehälter (1) offen ist, und
ein Einlass des Ablassrohrs (2b) an einem Gasphasenabschnitt des Flüssigkeitsbehälters (1) offen ist.

5. Vorrichtung zum Einfangen von organischem Iod nach Anspruch 1, wobei
der Einlass des Einleitungsrohrs (2a) an dem Trockenbohrloch (11) in dem Kernreaktorbehälterbehälter (10) offen ist.

6. Vorrichtung zum Einfangen von organischem Iod nach Anspruch 1, wobei
der Einlass des Einleitungsrohrs (2a) an dem Nassbohrloch (12) in dem Kernreaktorbehälterbehälter (10) offen ist.

7. Verfahren zum Einfangen von organischem Iod zum Einfangen von organischem Iod in einem Kernreaktorbehälterbehälter (10) unter Verwendung der Vorrichtung zum Einfangen von organischem Iod nach einem der Ansprüche 1 bis 6,
**dadurch gekennzeichnet, dass**
das Verfahren umfasst:
Erwärmen einer nichtflüchtigen Flüssigkeit (L1), die in der Lage ist, organisches Iod durch Wärme in dem Kernreaktorbehälterbehälter (10) oder Reaktionswärme von Fluid in dem Kernreaktorbehälterbehälter (10) zu zersetzen;
Bewirken, dass das Fluid, das organisches Iod enthält, in dem Kernreaktorbehälterbehälter (10) durch die erwärmte nichtflüchtige Flüssigkeit (L1) hindurchgeht; und
Zersetzen und Einfangen des organischen Iods in der nichtflüchtigen Flüssigkeit (L1).

## Revendications

1. Appareil de piégeage d'iode organique qui est configuré pour piéger de l'iode organique dans une cuve de confinement de réacteur nucléaire (10), comprenant :
une cuve de liquide (1) contenant un liquide non volatil (L1) capable de décomposer de l'iode organique ; et
un tuyau d'introduction (2a) pour introduire un fluide contenant de l'iode organique dans la cuve de confinement de réacteur nucléaire (10) dans le liquide non volatil (L1), dans lequel
l'appareil est configuré pour chauffer le liquide non volatil (L1) par la chaleur de réaction du fluide dans la cuve de confinement de réacteur nucléaire (10), et ensuite pour décomposer et piéger l'iode organique, dans lequel
la cuve de liquide (1) est installée dans un puits sec (11) ou dans un puits humide (12) dans la cuve de confinement de réacteur nucléaire (10), et
le liquide non volatil (L1) est chauffé par la chaleur dans la cuve de confinement de réacteur nucléaire (10),
**caractérisé par**
un réacteur (14) autour de la cuve de liquide (1), dans lequel
le réacteur (14) génère la chaleur de réaction en provoquant une réaction exothermique du fluide dans la cuve de confinement de réacteur nucléaire (10).

2. Appareil de piégeage d'iode organique selon la revendication 1, comprenant en outre :
un dispositif de chauffage (18) autour de la cuve de liquide (1), dans lequel
le dispositif de chauffage (18) est configuré pour chauffer davantage le liquide non volatil (L1) chauffé par la chaleur dans la cuve de confinement de réacteur nucléaire (10).

3. Appareil de piégeage d'iode organique selon la revendication 1, comprenant en outre :
un tuyau de décharge (2b) pour décharger le fluide introduit dans le liquide non volatil (L1) depuis la cuve de liquide (1), dans lequel
une sortie du tuyau d'introduction (2a) est ouverte au niveau d'une partie supérieure dans la cuve de liquide (1), et
une entrée du tuyau de décharge (2b) est ouverte au niveau d'une partie inférieure de la cuve de liquide (1).

4. Appareil de piégeage d'iode organique selon la revendication 1, comprenant en outre :
un tuyau de décharge (2b) pour décharger le fluide introduit dans le liquide non volatil (L1) depuis la cuve de liquide (1), dans lequel
une sortie du tuyau d'introduction (2a) est ouverte au niveau d'une partie de phase liquide dans la cuve de liquide (1), et
une entrée du tuyau de décharge (2b) est ouverte au niveau d'une partie de phase gazeuse de la cuve de liquide (1).

5. Appareil de piégeage d'iode organique selon la revendication 1, dans lequel
l'entrée du tuyau d'introduction (2a) est ouverte au niveau du puits sec (11) dans la cuve de confinement de réacteur nucléaire (10).

6. Appareil de piégeage d'iode organique selon la revendication 1, dans lequel
l'entrée du tuyau d'introduction (2a) est ouverte au niveau du puits humide (12) dans la cuve de confinement de réacteur nucléaire (10).

7. Procédé de piégeage d'iode organique pour piéger de l'iode organique dans une cuve de confinement de réacteur nucléaire (10) en utilisant l'appareil de piégeage d'iode organique selon l'une des revendications 1 à 6,
**caractérisé en ce que**
le procédé comprend :
le chauffage d'un liquide non volatil (L1) capable de décomposer de l'iode organique par la chaleur dans la cuve de confinement de réacteur nucléaire (10) ou la chaleur de réaction du fluide dans la cuve de confinement de réacteur nucléaire (10) ;
le passage du fluide contenant de l'iode organique dans la cuve de confinement de réacteur nucléaire (10) à travers le liquide non volatil chauffé (L1) ; et
la décomposition et le piégeage de l'iode organique dans le liquide non volatil (L1).
